# EUROPÄISCHE PATENTANMELDUNG

(11) **EP 4 403 845 A1**
(43) Veröffentlichungstag der Anmeldung: **24.07.2024**
(21) Anmeldenummer: 23157641.4
(22) Anmeldetag: 20.02.2023
(51) Int. Cl.: F24S 25/12, F24S 25/617, F24S 25/65, F24S 25/70, H02S 20/10, F24S 40/44, A01G 9/24, E04H 12/22

(54) **ANORDNUNG UND BEFESTIGUNGSADAPTER ZUM ANBRINGEN VON SOLARMODULEN AN EINER HALTEKONSTRUKTION, DIE AUF EINER LANDWIRTSCHAFTLICHEN FLÄCHE ERRICHTET IST**

(30) Priorität: 20.01.2023 DE 202023100298 U; 20.01.2023 EP 23152749
(71) Anmelder: Haastert, Markus, 15518 Steinhöfel (DE); Hilber, Franz, 6152 Trins (AT); Agrosolar Europe GmbH, 15518 Steinhöfel (DE)
(72) Erfinder: HILBER, Franz, 128 6152 Trins (AT); HAASTERT, Markus, 15518 Steinhöfel (DE)
(74) Vertreter: Pfenning, Meinig & Partner mbB

(57) **Zusammenfassung**

Die Erfindung betrifft eine Anordnung (10) zum Anbringen von Solarmodulen (24) an einer Haltekonstruktion (12), die auf einer landwirtschaftlichen Fläche (2) errichtet ist, wobei die Haltekonstruktion (12) zum Halten von Pflanzenschutznetzen, Pflanzenschutzfolien, Rankhilfen, Seilen oder anderem landwirtschaftlichen Zubehör eingerichtet ist;
wobei die Anordnung (10) ein Trägersystem (11) umfasst mit:
- wenigstens einem langgestreckten Träger (18), der für ein Leiten von Wasser entlang seiner Längsachse (L) eingerichtet ist, und;
- einer Trägerstruktur (22), die sich an dem langgestreckten Träger (18) abstützt und an der eine Mehrzahl von Solarmodulen anbringbar ist;

und wobei die Anordnung (10) eine Mehrzahl von Befestigungsadaptern (30) umfasst, die für ein Befestigen des Trägersystems (11) an der Haltekonstruktion (12) eingerichtet sind und wobei jeder Befestigungsadapter (30) an wenigstens eine Abmessung der Haltekonstruktion (12) und/oder an einen Neigungswinkel der Haltekonstruktion (12) anpassbar ist.

## Beschreibung

Die Erfindung betrifft eine Anordnung und einen Befestigungsadapter zum Anbringen von Solarmodulen an einer Haltekonstruktion, die auf einer landwirtschaftlichen Fläche errichtet ist.

Das Errichten von Photovoltaikanlagen mit einer Mehrzahl von Solarmodulen oberhalb von landwirtschaftlichen Flächen ist bekannt. Dies betrifft insbesondere landwirtschaftliche Flächen, die sich zum Beispiel außerhalb von Gewächshäusern oder vergleichbaren Einhausungen befinden, d.h. die landwirtschaftliche Freiflächen sind. Ein Beispiel einer solchen Anlage findet sich in der DE 202021100803 U1 der Anmelderin. In der Fachsprache werden derartige Anlagen dem Gebiet der Agri-Photovoltaik zugeordnet.

Eine Herausforderung bei der Agri-Photovoltaik besteht in dem Aufwand und in den Kosten zum Errichten entsprechender Anlagen. Auch beanspruchen diese Anlagen Raum, der oftmals nicht mehr für anderweitige landwirtschaftliche Infrastruktur oder zum Anbau von Pflanzen nutzbar ist.

Es ist daher eine Aufgabe der vorliegenden Erfindung, das Anordnen von Solarmodulen auf (und genauer gesagt oberhalb von) landwirtschaftlichen Flächen zu verbessern. Insbesondere ist es eine Aufgabe, den hiermit verbundenen Aufwand und die Kosten zu begrenzen und/oder die Raumausnutzung zu verbessern.

Diese Aufgabe wird durch die Gegenstände der beigefügten unabhängigen Ansprüche gelöst. Vorteilhafte Ausführungsformen sind in den Unteransprüchen, in dieser Beschreibung und in den Figuren definiert.

Dementsprechend wird eine Anordnung zum Anbringen von Solarmodulen an einer Haltekonstruktion vorgeschlagen, die auf einer landwirtschaftlichen Fläche (insbesondere eine Freifläche) errichtet ist. Die Haltekonstruktion kann zum Beispiel zum Halten von Pflanzenschutznetzen, Pflanzenschutzfolien, Rankhilfen, Seilen oder anderem landwirtschaftlichen Zubehör eingerichtet sein. Unter Seilen können hier auch nicht verdrehte oder geflochtene flexible Materialstränge verstanden werden, beispielsweise Kunststoffschnüre oder andere einsträngige Materialstränge.

Die Anordnung umfasst ein Trägersystem mit:
- wenigstens einem langgestreckten Träger, der für ein Leiten von Wasser entlang seiner Längsachse eingerichtet ist, und;
- einer Trägerstruktur, die sich an dem langgestreckten Träger abstützt und an der eine Mehrzahl von Solarmodulen anbringbar ist.

Die Anordnung umfasst auch eine Mehrzahl von Befestigungsadaptern, die für ein Befestigen des Trägersystems an der Haltekonstruktion eingerichtet sind und wobei jeder Befestigungsadapter an wenigstens eine Abmessung der Haltekonstruktion und/oder an (insbesondere wenigstens) einen Neigungswinkel der Haltekonstruktion anpassbar ist. Der Neigungswinkel der Haltekonstruktion kann zum Beispiel ein Neigungswinkel relativ zur landwirtschaftlichen Fläche sein. Der Neigungswinkel kann von jeglichem hierin offenbarten bodenmontierten Element der Haltekonstruktion definiert werden.

Die Haltekonstruktion kann bereits errichtet sein, insbesondere in einem deutlichen zeitlichen Abstand zu dem Ergänzen der hier offenbarten Anordnung. Entsprechend kann mit der hierin offenbarten Lösung eine Möglichkeit zum Nachrüsten von Solarmodulen (und somit Nachrüsten einer Photovoltaikanlage) auf und unter Nutzung einer bereits bestehenden Haltekonstruktion bereitgestellt werden.

Die Haltekonstruktion kann gängigen Beispielen aus dem Stand der Technik entsprechen. Sie kann bodenmontiert sein. Gemäß einer Variante ist die hier offenbarte Anordnung (oder zumindest deren Trägersystem) hingegen nicht unmittelbar bodenmontiert und/oder weist keinen Bodenkontakt auf, mit Ausnahme einer nachstehend erläuterten optionalen Stützanordnung. Stattdessen kann die hier offenbarte Anordnung (oder zumindest deren Trägersystem) oberhalb der landwirtschaftlichen Fläche verbleiben. Hierfür kann sie durch die Haltekonstruktion getragen und/oder gestützt werden. Insbesondere kann die hier offenbarte Anordnung (oder zumindest dessen Trägersystem) auf die Haltekonstruktion aufgesetzt werden und/oder zumindest teilweise vertikal oberhalb von dieser positioniert sein. Die Haltekonstruktion kann folglich als vertikaler Abstandshalter zur landwirtschaftlichen Fläche dienen.

Hierin getätigte Bezugnahmen auf Raumrichtungen wie vertikal oder horizontal können sich auf die landwirtschaftlichen Fläche beziehen und/oder in Bezug auf diese definiert sein. Eine vertikale Richtung kann entlang einer Achse vorliegen, entlang derer die Gravitationskraft wirkt. Sofern hierin auf einen Boden Bezug genommen wird, kann dieser von der landwirtschaftlichen Fläche umfasst sein.

Die Haltekonstruktion kann eine Mehrzahl von Pfählen oder anderen bodenmontierte Elemente umfassen, beispielsweise Stützen, Pfosten oder Säulen. Allgemein können die bodenmontierten Elemente jeweils langgestreckt sein. Sie können sich in einem Winkel zu der landwirtschaftlichen Fläche erstrecken. Dieser Winkel (insbesondere ein kleinster Winkel zwischen Element und Boden) kann beispielsweise mehr als 45° umfassen, zum Beispiel zwischen 50° und 90°.

Die Haltekonstruktion kann dazu eingerichtet sein, landwirtschaftliches Zubehör der oben genannten Art zu halten und/oder zu spannen. Dies kann auch ein mittelbares Halten und/oder Spannen umfassen, beispielsweise durch Halten und/oder Spannen von Seilen oder anderen Elementen, an denen landwirtschaftliches Zubehör jeglicher hierin offenbarten Art befestigt ist.

Die Haltekonstruktion und insbesondere deren optionale bodenmontierten Elemente können über eine Fläche von mehreren Quadratmetern, insbesondere mehreren 100 m², zum Beispiel mehr als 1000 m², innerhalb der landwirtschaftlichen Fläche verteilt sein. Auch die hier offenbarte Anordnung kann sich über mehrere 100 m², zum Beispiel mehr als 1000 m², erstrecken.

Jeder Befestigungsadapter kann zum Anpassen an die Haltekonstruktion zum Beispiel verstellbar sein und/oder in einer aus mehreren möglichen verschieden Relativanordnungen zu der Haltekonstruktion an dieser anordenbar sein. Beispielsweise kann ein Befestigungsadapter mehrteilig sein und eine entsprechende Mehrzahl von Komponenten umfassen. Ein Verstellen der Befestigungsadapter kann ein Ändern einer Relativanordnung dieser Komponenten zueinander umfassen. Die Haltekonstruktion kann hingegen nicht verstellbar sein. Insbesondere können deren Abmessungen und/oder Neigungswinkel unveränderlich sein.

Die Befestigungsadapter können die einzigen Bauteile sein, mittels denen die Anordnung und die Haltekonstruktion aneinander befestigt werden. Anders ausgedrückt können die Befestigungsadapter (insbesondere ausschließlich die Befestigungsadapter) das Trägersystem und die Haltekonstruktion miteinander koppeln, insbesondere mechanisch koppeln. Entlang einer vertikalen Raumachse betrachtet können die Befestigungsadapter zwischen zumindest einem Abschnitt der Haltekonstruktion und zumindest einem Abschnitt von dem Trägersystem positioniert sein. Zusätzlich oder alternativ können die Befestigungsadapter vertikal unterhalb von zumindest einem Abschnitt des Trägersystems und/oder vertikal oberhalb von zumindest einem Abschnitt der Haltekonstruktion positioniert sein.

Die Befestigungsadapter können an dem Trägersystem (insbesondere an wenigstens einer Komponente hiervon) und/oder der Haltekonstruktion mechanisch befestigt sein. Sofern hierin auf einen Befestigungsadapter in Einzahl Bezug genommen wird, versteht es sich, dass die entsprechende Ausführung auch für jegliche anderen Befestigungsadapter gelten kann. Dies schließt nicht aus, dass die Anordnung zusätzlich auch andere Befestigungsadapter umfassen kann, die nicht erfindungsgemäß ausgestaltet sind.

Ein Vorteil der hier offenbarten Anordnung ist, dass diese bei bereits bestehenden Haltekonstruktionen nachgerüstet werden kann. Durch Bereitstellen der Befestigungsadapter kann ein solches Nachrüsten ohne umfassende Änderungen an der Haltekonstruktion selbst erfolgen.

Des Weiteren wird eine Funktionsintegration erzielt, da die Haltekonstruktion neben dem Halten und/oder Spannen des landwirtschaftlichen Zubehörs auch für das Halten und insbesondere Tragen der Anordnung oberhalb der landwirtschaftlichen Fläche verwendet werden kann. Dies bedeutet, dass keine zusätzlichen (oder zumindest nur eine geringe Anzahl) von bodenmontierten Elemente zum direkten Halten der Anordnung erforderlich sind. Dies reduziert den Platzbedarf der Anordnung entsprechend, so dass ein größerer Anteil der landwirtschaftlichen Fläche für einen Pflanzenanbau nutzbar ist. Weiter reduziert dies die Kosten gegenüber bekannten Anlagen der Agri-Photovoltaik, bei denen bodenmontierte Unterkonstruktionen zum Stützen der Anordnung ein signifikanter Kostenfaktor sind. Auch ist diese Unterkonstruktion nicht zum Halten von landwirtschaftlichen Zubehör vorgesehen und verwendbar.

Mittels des wasserführenden Trägers wird zudem ein gezieltes Wassermanagement ermöglicht. Beispielsweise kann hiermit Regenwasser gezielt von den Solarmodulen in ein Reservoir abgeleitet werden. Diesem Reservoir kann das Wasser bedarfsgerecht zur Bewässerung der landwirtschaftlichen Fläche entnommen werden. Weiter wird hierdurch der Pflanzenschutz zum Beispiel bei Starkregen verbessert.

Gemäß einer Variante kann der Träger die Trägerstruktur stützen. Beispielsweise kann die Trägerstruktur (und/oder können die Befestigungsadapter) an dem Träger befestigt sein. Somit ermöglicht der Träger ebenfalls eine Funktionsintegration, da er neben der Wasserführung auch eine tragende und/oder statisch relevante Funktion bereitstellen kann.

Eine Ausführungsform sieht vor, dass jeder Befestigungsadapter zum Aufnehmen (oder auch zumindest teilweise Umschließen) eines Abschnitts von einem der bodenmontierten Elemente eingerichtet ist. Bei diesem Abschnitt kann es sich um ein freies Ende des bodenmontierten Elements handeln. Insbesondere kann es sich um einen von dem Boden weg weisenden (d. h. abgewandten) Abschnitt handeln. Alternativ oder zusätzlich kann es sich um einen Abschnitt und insbesondere ein Ende handeln, dass entlang der Träger-Längsachse betrachtet einem Abschnitt oder Ende entgegengesetzt ist, das nahe zu, an oder in dem Boden der landwirtschaftlichen positioniert ist. Beispielsweise kann der Befestigungsadapter für die Aufnahme von einer Spitze oder einem Kopf eines bodenmontierten Elements jeglicher hierin offenbarten Art eingerichtet sein.

Zusätzlich oder alternativ kann jeder Befestigungsadapter zum Aufnehmen (oder auch zumindest teilweise Umschließen) eines Abschnitts des landwirtschaftlichen Zubehörs eingerichtet sein. Insbesondere kann es sich um einen Abschnitt handeln, der an dem aufgenommenen Abschnitt des bodenmontierten Elementes gehalten wird. Der Befestigungsadapter kann zum Beispiel um eine bestehende Anordnung von bodenmontierten Element und daran gehaltenem landwirtschaftlichen Zubehör zusammengesetzt werden, ohne dass diese voneinander gelöst werden müssen.

Dass Aufnehmen im Befestigungsadapter kann umfassen, dass der entsprechende Abschnitt des bodenmontierten Elements und/oder des landwirtschaftlichen Zubehörs zumindest teilweise von dem Befestigungsadapter umgeben ist und/oder hiermit überlappt.

Gemäß einem Aspekt ist jeder Befestigungsadapter dazu eingerichtet, eine Klemmverbindung mit der Haltekonstruktion und/oder dem Träger (und/oder dem Trägersystem) herzustellen. Insbesondere kann der Befestigungsadapter für ein Erzeugen der Klemmkraft eingerichtet sein und/oder unter Erzielen der Klemmwirkung an der Haltekonstruktion (und/oder dem Träger und/oder Trägersystem) befestigt werden. Die Klemmverbindung kann gleichbedeutend mit dem Herstellen eines Reibschlusses oder, mit anderen Worten, eines Kraftschlusses sein. Zusätzlich oder alternativ kann ein Befestigungsadapter jeweils dazu eingerichtet sein, einen Formschluss mit der Haltekonstruktion (und/oder dem Träger und/oder Trägersystem) herzustellen. Die Klemmverbindung kann umfassen, dass die entsprechenden Fügepartner miteinander, ineinander und/oder gegeneinander verklemmt werden. Zum Beispiel kann der Träger in oder zwischen einer nachstehenden erläuterten Anordnung aus Befestigungsadapter und Gegenstück und/oder Befestigungsadapter und Trägersystem geklemmt werden.

Gemäß einer Weiterbildung ist der Befestigungsadapter vorzugsweise ausschließlich per Klemmverbindung und/oder Formschluss mit der Haltekonstruktion (und/oder dem Trägersystem) verbunden, insbesondere ohne dass an der Haltekonstruktion (und/oder dem Trägersystem) Modifikationen erforderlich sind. Beispielsweise kann die Haltekonstruktion (und/oder das Trägersystem) keine Befestigungsschrauben, Befestigungsbolzen oder dergleichen aufnehmen und/oder frei von entsprechenden hierfür vorzusehenden Bohrungen sein. Existierende Haltekonstruktionen für landwirtschaftliches Zubehör weisen insbesondere an ihren freien Endabschnitten selten derartige Strukturen auf, die für ein Aufnehmen von zum Beispiel Befestigungsbolzen nutzbar wären. Diese Strukturen müssten daher unter entsprechendem Aufwand erst hergestellt werden, was die hier offenbarten Befestigungsadapter vermeiden können.

Entsprechend sieht eine Ausführungsform vor, dass der Befestigungsadapter an der Haltekonstruktion (und/oder dem Trägersystem) ohne gemeinsame Aufnahme eines Befestigungsmittels (zum Beispiel eines Befestigungsbolzens oder einer -schraube) in dem Befestigungsadapter (und/oder in dem Trägersystem) und der Haltekonstruktion befestigbar ist.

Zusätzlich oder alternativ kann der Befestigungsadapter ausschließlich an Au-ßenflächen der Haltekonstruktion (und/oder des Trägersystems) anliegen und beispielsweise nicht an (zum Beispiel von etwaigen Bohrungen umfassten) Innenflächen der Haltekonstruktion (und/oder des Trägersystems).

Zusätzlich oder alternativ kann der Befestigungsadapter an der Haltekonstruktion (und/oder dem Trägersystem) befestigbar sein, ohne dass dieser (oder ein hiermit zusammenwirkendes Befestigungsmittel der vorstehenden Art) in der Haltekonstruktion (und/oder dem Trägersystem) aufgenommen ist, dort hineinragt, diese durchdringt oder in eine (insbesondere gesondert herzustellende) Bohrungen oder Ausnehmung hervorsteht oder eingreift.

Es versteht sich, dass aber auch Varianten von der Erfindung umfasst sind, bei denen die Befestigungsadapter an der Haltekonstruktion (und/oder dem Trägersystem) zum Beispiel mittels eines gesonderten Befestigungsmittels und/oder einen Eingriff in eine Bohrung in der Haltekonstruktion (und/oder dem Trägersystem) befestigt sind.

Zum Beispiel kann gemäß einer Variante der Befestigungsadapter mit der Trägerstruktur mittels eines Befestigungselements (z.B. einem Schraubbolzen) verbunden sein. Hierfür können der Befestigungsadapter und die Trägerstruktur einander zugewandte und/oder miteinander fluchtende Bohrungen aufweisen, in die das Befestigungselement einsetzbar ist. Der Befestigungsadapter und die Trägerstruktur können den Träger zwischen sich einklemmen. Der Befestigungsadapter kann zusätzlich oder alternativ mit einem Gegenstück verbindbar sein, das optional an einer gegenüberliegenden Seite (insbesondere an einer Oberseite) des Trägers angeordnet sein kann. Das Gegenstück kann ein Profilabschnitt sein oder umfassen. Es kann sich quer zu einer Längsachse des Trägers erstrecken. Seine Abmessung quer zur Längsachse des Trägers kann größer als eine Breite des Trägers sein. Das Gegenstück kann als ein allgemeiner Bestandteil der Anordnung und/oder als eine Komponente des Befestigungsadapters betrachtet werden.

Das Gegenstück kann wenigstens zwei Bohrungen aufweisen, die vorzugweise nahe einander gegenüberliegenden Seitenwänden (und insbesondere außerhalb von diesen) positioniert sein können. Zum Beispiel können die Bohrungen an entgegengesetzten Enden des Gegenstücks angeordnet sein. Dies gewährleistet eine einfache Verbindung von Befestigungsadapter und Gegenstück miteinander z.B. durch Verbinden dieser Bauteile mit einem gemeinsamen Befestigungselement.

Zusammengefasst sieht eine Weiterbildung vor, dass der Befestigungsadapter mit einem Gegenstück oder mit der Trägerstruktur verbunden ist (die jeweils an einer entgegensetzten Seite des Trägers positioniert sein können, zum Beispiel an dessen Oberseite). Wenigstens ein Abschnitt des Trägers kann zwischen dem Befestigungsadapter und dem Gegenstück oder zwischen dem Befestigungsadapter und der Trägerstruktur angeordnet und insbesondere eingeklemmt sein. Gemäß einer Variante sind der Befestigungsadapter und/oder die Trägerstruktur ausschließlich über entsprechende Klemmverbindungen mit dem Träger verbunden.

Insbesondere wenn die Trägerstruktur nicht mit dem Befestigungsadapter in der vorstehenden Weise verbunden ist, kann es mit einem analog ausgebildeten Gegenstück verbunden sein, bevorzugt unter analogem Einklemmen des Trägers. Das Gegenstück kann in diesem Fall an einer Unterseite des Trägers positioniert sein.

Sämtliche hierin diskutierten Befestigungen oder Verbindungen von der Trägerstruktur mit dem Befestigungsadapter oder mit einem Gegenstück können umfassen, dass ein einzelnes (ein- oder mehrteiliges) Profil der Trägerstruktur oder eine andere ausgewählte Komponente hiervon mit dem Befestigungsadapter oder Gegenstück verbunden ist.

Allgemein können für die Befestigung der Befestigungsadapter an dem Trägersystem sämtliche für die Befestigung der Befestigungsadapter an der Haltekonstruktion offenbarten Varianten ebenfalls gelten. Ebenso kann aber vorgesehen sein, dass die Befestigungsadapter mittels eines gesonderten Befestigungsmittels an dem Trägersystem befestigt und beispielsweise mit diesem verschraubt sind.

Gemäß einem weiteren Aspekt existiert eine Mehrzahl von Relativanordnungen von zumindest einem Bereich des Befestigungsadapters und dem Trägersystem, in oder mit (oder unter Einnahme von) denen ein jeder Befestigungsadapter an dem Trägersystem befestigbar ist (insbesondere an wenigstens einer Komponente hiervon, z. B. an dem Träger). Anders ausgedrückt kann der Befestigungsadapter dazu eingerichtet sein, unter Herstellen einer aus einer Mehrzahl prinzipiell möglicher Relativanordnungen an dem Trägersystem und insbesondere dessen Träger befestigt und insbesondere festgeklemmt zu werden.

Die möglichen Relativanordnungen können zum Beispiel dadurch vorgegeben werden, dass (insbesondere ausschließlich) in diesen eine Befestigung der Befestigungsadapter an dem Trägersystem und/oder an einem vorstehend erläuterten Gegenstück möglich ist. Beispielsweise können nur bei Einnahme von einer dieser Relativanordnungen vorgefertigte Lochmuster und/oder Bohrungen der Befestigungsadapter und des Trägersystems (insbesondere der Trägerstruktur) und/oder des Gegenstücks miteinander fluchten. Allgemein können die möglichen Relativanordnungen demnach vorbestimmt sein, insbesondere strukturell vorbestimmt, beispielsweise durch Vorfertigen der genannten Lochmuster und/oder Bohrungen.

Das Befestigen der Befestigungsadapter an dem Trägersystem in einer aus einer Mehrzahl von prinzipiell möglichen Relativanordnungen stellt einen entsprechenden Freiheitsgrad für die Montage bereit. Insbesondere wird hierdurch ermöglicht, dass mit dem Befestigungsadapter Versätze zwischen dem Trägersystem und der Haltekonstruktion zumindest teilweise ausgeglichen werden können. Dies reduziert den Anpassungsaufwand zum Beispiel an eine bereits errichtete Haltekonstruktion und/oder senkt die Genauigkeitsanforderungen bezüglich der Relativanordnung von Trägersystem und Haltekonstruktionen.

Gemäß einer optionalen Weiterbildung umfassen die möglichen Relativanordnungen, dass der zumindest eine Bereich des Befestigungsadapters in wenigstens zwei Positionen relativ zu dem Trägersystem (insbesondere relativ zu wenigstens einer Komponente hiervon) anordenbar und an diesem befestigbar ist. Dies betrifft insbesondere einen Zustand, in dem zumindest ein Teil des Befestigungsadapters bereits an der Haltekonstruktion befestigt ist. Es existieren also wenigstens zwei prinzipiell mögliche Positionen aus denen eine ausgewählt werden kann.

Diese Positionen sind bevorzugt entlang einer Achse verteilt, die in einem Winkel und insbesondere orthogonal zu der Längsachse des Trägers verläuft. Anders ausgedrückt kann der Befestigungsadapter (oder zumindest ein Bereich hiervon) in einem Winkel und insbesondere quer zu der Trägerlängsachse versetzbar sein, um zwischen den prinzipiell möglichen und insbesondere vorbestimmten Relativanordnungen zu wechseln. Mittels dieser Variante kann ein (bezogen auf die Trägerlängsachse) Querfreiheitsgrad beim Befestigen des Trägersystems an der Haltekonstruktion bereitgestellt werden.

Zusätzlich oder alternativ können die Relativanordnungen umfassen, dass der zumindest eine Bereich des Befestigungsadapters in wenigstens zwei Positionen relativ zu dem Trägersystem (insbesondere relativ zu wenigstens einer Komponente hiervon) anordenbar und an diesem befestigbar ist, wobei diese Positionen entlang einer Achse verteilt sind, die parallel zu oder entlang der Längsachse des Trägers verläuft. Auch dies betrifft insbesondere einen Zustand, in dem zumindest ein Teil des Befestigungsadapters bereits an der Haltekonstruktion befestigt ist. Mittels dieser Variante kann ein (bezogen auf die Trägerlängsachse) Längsfreiheitsgrad beim Befestigen des Trägersystems an der Haltekonstruktion bereitgestellt werden.

Die vorstehenden Relativanordnungen zwischen Befestigungsadapter und Trägersystem können jeweils in der Weise bereitgestellt sein, dass der Befestigungsadapter sie ohne eine Änderung seiner Relativanordnung zu der Haltekonstruktion einnehmen kann (z.B. da er an der Haltekonstruktion bereits befestigt ist). Hierfür kann der Befestigungsadapter entsprechend verstellbar sein und/oder relativ zueinander verlagerbare Komponenten oder Bereiche umfassen. Eine erste Komponente und/oder ein erster Bereich kann relativ zu der Haltekonstruktion feststehen, während eine andere Komponente und/ oder ein anderer Bereich relativ zu dem Trägersystem (und auch zu der ersten Komponente und/oder dem ersten Bereich) zwecks Wechseln zwischen den Relativanordnungen bewegbar sein kann.

Prinzipiell kann ein Querfreiheitsgrad, Längsfreiheitsgrad und/oder nachstehend diskutierter Höhenfreiheitsgrad auch in analoger Weise zwischen einem jeweiligen Befestigungsadapter und der Haltekonstruktion bereitgestellt sein. Beispielsweise kann vorgesehen sein, dass eine Mehrzahl von Relativanordnungen von zumindest einem Bereich des Befestigungsadapters und der Haltekonstruktion existiert, in denen der Befestigungsadapter an der Haltekonstruktion befestigbar ist. Die Relativanordnungen können umfassen, dass der zumindest eine Bereich des Befestigungsadapters in wenigstens zwei Positionen relativ zu der Haltekonstruktion anordenbar und an dieser befestigbar ist, wobei diese Positionen entlang einer Achse verteilt sind, die in einem Winkel und insbesondere orthogonal zu einer Längsachse der Haltekonstruktion verläuft. Zusätzlich oder alternativ können die Relativanordnungen umfassen, dass der zumindest eine Bereich des Befestigungsadapters in wenigstens zwei Positionen relativ zu der Haltekonstruktion anordenbar und an dieser befestigbar ist, wobei diese Positionen entlang einer Achse verteilt sind, die parallel zu oder entlang einer Längsachse der Haltekonstruktion verläuft.

Es kann auch vorgesehen sein, dass grundsätzlich weniger Freiheitsgrade und/oder mögliche Relativanordnungen zwischen einem jeweiligen Befestigungsadapter und der Haltekonstruktion bereitgestellt sind als zwischen einem jeweiligen Befestigungsadapter und dem Trägersystem. Der umgekehrte Fall, dass zwischen einem jeweiligen Befestigungsadapter und der Haltekonstruktion mehr der hier offenbarten Freiheitsgrade bereitgestellt sind als zwischen einem jeweiligen Befestigungsadapter und dem Trägersystem kann aber auch vorgesehen sein. Prinzipiell können die hierin offenbarten Freiheitsgrade eines jeweiligen Befestigungsadapters zu der Haltekonstruktion und zu dem Trägersystem beliebig kombiniert werden.

Beispielsweise kann zwischen den jeweiligen Befestigungsadaptern und der Haltekonstruktion kein Querfreiheitsgrad vorgesehen sein (d. h. quer relativ zu einer Längsachse der Haltekonstruktion und insbesondere von einem bodenmontierten Element hiervon), da die Ausrichtung entlang einer entsprechenden Querachse zum Beispiel durch die Formgebung der Haltekonstruktion vorgegeben ist. Auch ein Freiheitsgrad zwischen Befestigungsadapter und Haltekonstruktion entlang einer Längsachse der Haltekonstruktion (insbesondere von einem bodenmontierten Element hiervon) kann fehlen, beispielsweise wenn eine entsprechende Position des Befestigungsadapters durch einen Formschluss mit der Haltekonstruktion vorgegeben ist.

Gemäß einer Weiterbildung umfasst der Befestigungsadapter einen Aufnahmeraum zur Aufnahme eines Abschnitts der Haltekonstruktion (und/oder des Trägersystems), wobei wenigstens eine Abmessung des Aufnahmeraums variierbar ist. Beispielsweise kann der Aufnahmeraum zwecks Erzeugen einer Klemmwirkung verengt werden. In diesem Fall kann der Befestigungsadapter insbesondere die nachstehend erläuterten Unterkomponenten umfassen, deren Abstand relativ zueinander variierbar und insbesondere reduzierbar sein kann. Mittels dieser Variante kann insbesondere eine Art Dicken- oder Querschnittfreiheitsgrad bezogen auf die Haltekonstruktion (und/oder das Trägersystem) bereitgestellt werden. Auch dies reduziert den erforderlichen Anpassungsaufwand an die mit dem Befestigungsadapter zu verbindenden Haltekonstruktion und erhöht das mögliche Einsatzspektrum der hier offenbarten Anordnung.

In dem Aufnahmeraum (oder einem separaten anderen Aufnahmeraum) kann ein Teil des von der Haltekonstruktion umfassten landwirtschaftlichen Zubehörs (z.B. ein Seilsystem) aufnehmbar sein. Insbesondere kann dieses an der Haltekonstruktion befestigt oder befestigbar sein und dabei zumindest teilweise von dem Befestigungsadapter umgeben oder in diesem aufgenommen sein. Wenn der Befestigungsadapter mehrteilig ist, können dessen Komponenten zum Beispiel derart an und um die Haltekonstruktion zusammengesetzt werden, dass sie den genannten Teil des landwirtschaftlichen Zubehörs ebenfalls zwischen sich aufnehmen, beispielsweise ohne dass dieser zumindest temporär entfernt oder anderweitig manipuliert werden muss. Dies vereinfacht die Montage und reduziert den Nachrüstaufwand der Anordnung. Gemäß einer Weiterbildung umfasst der Befestigungsadapter eine erste Komponente zum Befestigen an der Haltekonstruktion und wenigstens eine zweite Komponente zum Befestigen an dem Trägersystem (insbesondere an wenigstens einer Komponente hiervon), wobei die erste und die zweite Komponente verschieden relativ zueinander anordenbar sind. Beispielsweise können die erste und die zweite Komponente entlang einer vertikalen Raumachse verschieden relativ zueinander anordenbar sein. Die stellt eine Art internen Höhenfreiheitsgrad des Befestigungsadapters bereit, mit dem zum Beispiel Höhenversätze innerhalb der Haltekonstruktion (z.B. zwischen benachbarten Pfählen) zumindest teilweise ausgeglichen werden können.

Insbesondere kann die erste oder die zweite Komponente wenigstens zwei Unterkomponenten umfassen, beispielsweise zwei Hälften, deren Relativanordnung zueinander variierbar ist. Durch das Ändern der Relativanordnung derartiger Unterkomponenten, die von der ersten Komponente umfasst sind, kann zum Beispiel die wenigstens eine Abmessung des Aufnahmeraums zum Aufnehmen der Haltekonstruktion variierbar sein. Die Relativanordnung kann quer zu einer Längsachse der Haltekonstruktion (z.B. eines bodenmontierten Elements hiervon) geändert werden.

Zusätzlich oder alternativ kann die erste oder die zweite Komponente ein Lochmuster aufweisen, das ein Herstellen der verschiedenen Relativanordnungen ermöglicht, insbesondere der Relativanordnungen zu dem Trägersystem, wenn das Lochmuster in der zweiten Komponente vorgesehen ist. Das Lochmuster kann eine Anzahl von Durchgangsbohrungen umfassen, von denen je nach aktueller Relativanordnung nur ausgewählte mit einer oder mehreren Bohrungen in dem Trägersystem (oder der Haltekonstruktion) fluchten können. Die Bohrungen können zum Beispiel in der Trägerstruktur vorgesehen sein. Alternativ können sie in einem Gegenstück der hierin offenbarten Art ausgebildet sein.

Gemäß einer Weiterbildung weist der Befestigungsadapter wenigstens eine dritte Komponente auf, die dazu eingerichtet ist, die erste Komponente und die zweite Komponente insbesondere unter Einstellen einer Relativanordnung zwischen der ersten und zweiten Komponente zumindest mittelbar miteinander zu koppeln. Diese dritte Komponente kann verschieden von den hierin offenbarten optionalen Unterkomponenten von einer von erster und zweiter Komponente sein.

Die dritte Komponente kann als ein Abstandshalter zwischen der ersten der zweiten Komponente wirken. Dieser Abstand kann insbesondere entlang einer vertikalen Raumachse vorliegen. Zusätzlich oder alternativ kann die dritte Komponente eine Relativneigung oder, mit anderen Worten, einen Winkel zwischen der ersten der zweiten Komponente festlegen. Beispielsweise kann die dritte Komponente eine gewinkelte Form aufweisen. Alternativ oder zusätzlich kann eine Anordnung von der dritten Komponente an wenigstens einer von erster und zweiter Komponente entlang einer vertikalen Raumachse variierbar sein, zum Beispiel zwecks Höhenanpassung des Befestigungsadapters.

Die dritte Komponente kann folglich einen weiteren Freiheitsgrad zum Anpassen des Befestigungsadapters an die Haltekonstruktion und/oder das Trägersystem bereitstellen. Insbesondere kann auf diese Weise eine Anpassung an einen Neigungswinkel der Haltekonstruktion ermöglicht werden, beispielsweise ohne dass die Haltekonstruktion selbst angepasst werden muss. Je nach Neigungswinkel der Haltekonstruktion kann zum Beispiel eine dritte Komponente mit einem geeigneten Neigungswinkel ausgewählt werden. Der Befestigungsadapter kann folglich in Abhängigkeit des Neigungswinkels der Haltekonstruktion geeignet zusammengestellt werden.

Allgemein kann jeder Befestigungsadapter gelenkfrei sein, aktorfrei sein und/oder spätestens nach einem Befestigen an der Haltekonstruktion und/oder dem Trägersystem unbeweglich und/oder unverstellbar sein. Stattdessen können spätestens nach Einstellen jeglicher hierin beschriebenen Relativanordnungen sämtliche Komponenten jedes Befestigungsadapters definiert zueinander festgelegt sein. Entsprechend können diese Relativanordnungen je nach den (insbesondere lokalen) Abständen und/oder Winkeln zwischen Haltekonstruktion und Trägersystem gewählt und festgelegt werden (beispielsweise durch mechanisches Befestigen etwaiger Komponenten der Befestigungsadapter aneinander) und können die Befestigungsadapter entsprechend verbaut werden.

Dies ist eine kostengünstige und einfach zu montierende Variante zum Bereitstellen jeglicher der hierin diskutierten Freiheitsgrade durch die Befestigungsadapter.

Gemäß einer Weiterbildung ist der Träger an einer von der landwirtschaftlichen Fläche wegweisenden Oberseite zumindest abschnittsweise geöffnet. Hierdurch kann Regenwasser von vertikal oberhalb in den Träger eingeleitet werden, zum Beispiel direkt von Solarmodulen, die benachbart zu dem Träger positioniert sind.

Zwecks Wasserleiten kann der Träger rinnenförmig ausgebildet sein und/oder einen rinnenförmigen Abschnitt umfassen. Beispielsweise kann der Träger einen U-förmigen Querschnitt, einen rechteckförmigen Querschnitt oder einen anderen zumindest teilweise geschlossenen Querschnitt aufweisen. Optional können Versteifungselemente (z.B. Versteifungsbleche) gegenüberliegende Seitenwände des Trägers miteinander verbinden und/oder gegeneinander versteifen.

Bei einer Weiterbildung ist der Träger und insbesondere eine das Wasser führende Fläche hiervon gefällefrei, zumindest in einem nicht in der Anordnung verbauten Zustand. Anders ausgedrückt kann der Träger für sich genommen (beispielsweise vor einer Montage innerhalb der Anordnung und/oder bei Anlieferung und/oder nach dessen Fertigung) gefällefrei sein. Zum Beispiel kann der Träger auf einem ebenen Untergrund ablegbar sein, wobei dessen wasserführende Fläche parallel zu diesem ebenen Untergrund verläuft. Das erforderliche Gefälle zum Ermöglichen eines gravitationsgestützten Wasserleitens kann demnach erst beim Montage innerhalb der Anordnung hergestellt werden, insbesondere durch einen entsprechend geneigten Einbau des Trägers. Diese Neigung kann über Höhenverstellung mittels und/oder innerhalb der Befestigungsadapter hergestellt werden.

Beispielsweise kann vorgesehen sein, dass die Befestigungsadapter dazu eingerichtet sind, das Trägersystem unter Einstellen einer Neigung des Trägers zur landwirtschaftlichen Fläche an der Haltekonstruktion zu befestigen. Hierfür können zum Beispiel wenigstens zwei Befestigungsadaptern unterschiedliche Höhenabstände des Trägers zu der Haltekonstruktion einstellen, sodass dieser zum Beispiel zumindest zwischen den Befestigungsadaptern entsprechend geneigt verläuft. Zum Einstellen der Höhenabstände mit den Befestigungsadaptern können z. B. sämtliche hierin offenbarten Varianten von Befestigungsadaptern umfassend Höhenfreiheitsgrade und/oder mehrere Komponenten herangezogen werden.

Die Trägerstruktur kann separat von den Träger ausgebildet, aber zumindest mittelbar an diesem befestigt sein. Die Trägerstruktur kann mehrere Abschnitte umfassen, insbesondere Rahmenabschnitte oder Profile, die zum Beispiel entlang der Trägerlängsachse aufeinanderfolgend und axial beabstandet verteilt sind. Diese Rahmenabschnitte oder Profile können insbesondere gemeinsam Bereiche und genauer gesagt Auflagebereiche für Solarmodule definieren. Diese Rahmenabschnitte oder Profile können an nur einem Träger befestigt sein oder an mehreren Trägern und somit die Träger miteinander verbinden.

Gemäß einer Variante umfasst die Trägerstruktur wenigstens einen (bspw. relativ zur landwirtschaftlichen Fläche geneigten) (Auflage-) Bereich, an dem wenigstens ein Solarmodul anordenbar ist. Dieser Bereich kann zum Träger abfallend geneigt sein und/oder an den Träger angrenzen, insbesondere an einem nach oben offenen wasserführenden Bereich hiervon.

Beispielsweise kann Regenwasser von einem an dem geneigten Bereich angeordneten Solarmodul in den Träger leitbar sein. Genauer gesagt kann Regenwasser entlang des Solarmoduls und der Neigung des geneigten Bereichs folgend (d.h. gravitationsgestützt) in Richtung des Trägers und in diesen hineinfließen und dort in definierter Weise weitergeleitet werden.

An den Träger können beidseitig entsprechend geneigte Bereiche angrenzen. Genauer gesagt kann die Trägerstruktur wenigstens zwei geneigte Bereiche aufweisen, die an gegenüberliegenden Seiten (insbesondere Längsseiten) des Trägers angeordnet sind, und die jeweils zum Träger abfallend geneigt sind. In einer orthogonal zur Träger-Längsachse ausgerichteten Ebene betrachtet können diese Bereiche zum Beispiel eine V-Form definieren, wobei der Träger den Schnittpunkt der beiden Schenkel der V-Form bildet.

Gemäß einer Weiterbildung umfasst die Anordnung eine Mehrzahl von Trägern, die jeweils mit der Trägerstruktur verbunden sind, wobei die Trägerstruktur in einem Bereich zwischen den Trägern zwei entgegengesetzt geneigte Bereich aufweist, die zu einem jeweils benachbarten Träger hin abfallend geneigt sind. Folglich kann die Trägerstruktur insbesondere mittig zwischen den Trägern erhöht sein.

Die vorstehend geschilderten Varianten betreffend das Zusammenspiel von Trägern geneigten Bereich ermöglichen jeweils ein effizientes Auffangen und Ableiten von Regenwasser mit geringem konstruktiven Aufwand sowie bei einer hohen Anzahl von Solarmodulen.

Gemäß einer Weiterbildung umfasst der Träger wenigstens einen Ableitbereich (zum Beispiel eine Ableitöffnung oder ein Fallrohr), um Wasser aus dem Träger abzuleiten. Insbesondere kann das Wasser zu einem bevorzugt bodenmontierten Sammelreservoir geleitet werden, das optional von der Anordnung umfasst sein kann. Der Ableitbereich kann z.B. ein Fallrohr umfassen oder mit einem solchen verbindbar sein.

Optional kann der Ableitbereich von einem separat handhabbaren Element oder Modul umfasst sein. Dieses kann mit einem benachbarten Träger verbindbar sein und insbesondere (bspw. entlang der Träger-Längsachsen betrachtet) zwischen zwei benachbarten Trägern angeordnet sein und diese miteinander verbinden. Das Element oder Modul kann (z. B. entlang einer Träger-Längsachse betrachtet) kürzer als damit verbundene Träger sein und z.B. maximal ein Viertel oder maximal ein Achtel von deren Länge aufweisen. Eine Verbindung mit benachbarten Trägern kann per Form- und/oder Kraftschluss und insbesondere mittels einer Steckverbindung erzielt werden.

Das Vorsehen von Ableitbereichen ermöglicht eine gezielte Wasserführung. Durch Bereitstellen separater Modul mit Ableitbereichen zur Verbindung mit den Trägern kann die Herstellung der Träger vereinfacht werden, z.B. da dort keine Ableitbereiche unmittelbar integriert werden müssen.

Wie vorstehend angedeutet, sieht eine Weiterbildung vor, dass jeder Befestigungsadapter um einen Abschnitt der Haltekonstruktion zusammensetzbar ist, insbesondere ohne dass das landwirtschaftliche Zubehör von der Haltekonstruktion gelöst werden muss.

Eine Weiterbildung sieht vor, dass (z.B. bei einer Variante, wonach die Haltekonstruktion mehrere Pfähle oder andere bodenmontierte Elemente umfasst) die Anordnung wenigstens eine bodenmontierte Stützanordnung umfasst, die dazu eingerichtet ist, wenigstens einen der Pfähle oder eines der anderen bodenmontierte Elemente gegenüber der landwirtschaftlichen Fläche abzustützen. Dies kann eine bestehende Haltekonstruktion in Anbetracht der Last einer nachgerüsteten Anordnung der hier offenbarten Art zusätzlich stabilisieren.

Die Stützanordnung kann wenigstens zwei Stützelemente umfassen, zwischen denen ein Teil des wenigstens einen Pfahls oder des anderen bodenmontierten Elements aufnehmbar ist, insbesondere wobei der aufgenommene Teil zwischen den Stützelementen einklemmbar ist. Hierfür können die Stützelemente unter Einklemmen des aufgenommenen Teils aneinander befestigt werden. Diese Befestigung kann mechanisch erfolgen, z.B. mittels Schraubbolzen. Verwendete Befestigungselemente werden bevorzugt an der Haltekonstruktion vorbei geführt. Das Aufnehmen der Haltekonstruktion zwischen den Stützelementen kann keine Anpassungen an der Haltekonstruktion erfordern und ist mit einer großen Bandbreite verschiedener Haltekonstruktionen kombinierbar. Es ermöglicht zudem eine aufwandsarme Installation bei sicherem Halt.

Optional umfasst wenigstens eines der Stützelemente einen gegenüber der landwirtschaftlichen Fläche angewinkelten Abschnitt, wobei in dem angewinkelten Abschnitt eine Öffnung zu Aufnahme eines Gewindestabs oder eines anderen bodenmontierten Verbindungselements ausgebildet ist. Der Winkel, um den der Abschnitt gegenüber der landwirtschaftlichen Fläche angewinkelt ist, kann z.B. 45 ° oder zwischen 20° und 55° betragen. Die Ausrichtung des angewinkelten Abschnitts kann eine Ausrichtung des aufgenommenen Verbindungselements festlegen, wobei diese Ausrichtung ebenfalls angewinkelt zur landwirtschaftlichen Fläche sein kann. Es hat sich gezeigt, dass entsprechende Anwinkelungen eine aufwandsarme Montage bei hoher resultierender Stabilität der Stützanordnungen ermöglichen. Das Sichern über Gewindestäbe oder auch mittels anderer (bevorzugt langgestreckte) Verbindungselemente kann dem Herstellen einer Spinnankerverbindnung mit dem Untergrund entsprechen.

Gemäß einer weiteren Ausführungsform umfasst der Befestigungsadapter wenigstens eine Gewindebohrung, in die eine Stellschraube eingesetzt oder einsetzbar ist. Die Gewindebohrung kann mit einem Bereich der Haltekonstruktion derart überlappen, dass sich die Stellschraube an der Haltekonstruktion abstützen kann. Durch Variieren der Einschraubtiefe der Stellschraube kann eine Relativausrichtung von Befestigungsadapter und Haltekonstruktion eingestellt werden.

Die Erfindung betrifft auch einen Befestigungsadapter zum Befestigen eines Trägersystems für Solarmodule an einer Haltekonstruktion, die auf einer landwirtschaftlichen Fläche errichtet ist, wobei die Haltekonstruktion zum Halten von Pflanzenschutznetzen, Pflanzenschutzfolien, Rankhilfen, Seilen oder anderen landwirtschaftlichem Zubehör eingerichtet ist; wobei der Befestigungsadapter an wenigstens eine Abmessung der Haltekonstruktion und/oder an wenigstens einen Neigungswinkel der Haltekonstruktion anpassbar ist. Der Befestigungsadapter kann gemäß jeglicher hierin offenbarten Variante ausgebildet und/oder einstellbar sein.

Ferner betrifft die Erfindung einer Anordnung gemäß jeglichem hierin offenbarten Aspekt die an einer Haltekonstruktion gemäß jeglichem hierin offenbarten Aspekt befestigt ist. Genauer gesagt wird auch ein System offenbart, mit:
- einer Anordnung nach einem der vorangehenden Aspekte; und
- einer Haltekonstruktion, die auf einer landwirtschaftlichen Fläche errichtet oder errichtbar ist, wobei die Haltekonstruktion zum Halten von Pflanzenschutznetzen, Pflanzenschutzfolien, Rankhilfen, Seilen oder anderen landwirtschaftlichem Zubehör eingerichtet ist;
wobei das Trägersystem der Anordnung mittels den Befestigungsadaptern der Anordnung an der Haltekonstruktion befestigt ist.

Weiter betrifft die Erfindung eine Stützanordnung zum Stabilisieren einer Haltekonstruktion, die auf einer landwirtschaftlichen Fläche errichtet oder errichtbar ist, wobei die Haltekonstruktion zum Halten von Pflanzenschutznetzen, Pflanzenschutzfolien, Rankhilfen, Seilen oder anderem landwirtschaftlichen Zubehör eingerichtet ist, wobei die Stützanordnung wenigstens zwei Stützelemente umfasst, zwischen denen ein Teil von wenigstens einem Pfahl oder einem anderen bodenmontierten Element der Haltekonstruktion aufnehmbar und insbesondere einklemmbar ist,
wobei wenigstens eines der Stützelemente einen gegenüber der landwirtschaftlichen Fläche angewinkelten Abschnitt umfasst, wobei in dem angewinkelte Abschnitt eine Öffnung zur Aufnahme eines Gewindestabs oder eines anderen bodenmontierten Verbindungselements ausgebildet ist.

Offenbart wird außerdem ein Verfahren zum Ausbilden einer Anordnung gemäß jeglichem hierin geschilderten Aspekt. Insbesondere offenbart wird ein Verfahren zum Ausbilden einer Anordnung für das Anbringen von Solarmodulen an einer Haltekonstruktion, die auf einer landwirtschaftlichen Fläche errichtet ist, insbesondere an einer Haltekonstruktion zum Halten von Pflanzenschutznetzen, Pflanzenschutzfolien, Seilen, Rankhilfen oder anderem landwirtschaftlichen Zubehör;
wobei das Verfahren umfasst:
- Verbinden eines Trägersystems, das wenigstens einen langgestreckten Träger aufweist, der für ein Führen von Wasser entlang seiner Längsachse eingerichtet ist, mit einer Trägerstruktur, die sich an dem langgestreckten Träger abstützt und an der eine Mehrzahl von Solarmodulen angebracht oder anbringbar ist; und
- Befestigen des Trägersystems (insbesondere wenigstens einer Komponente hiervon) an der Haltekonstruktion mit einer Mehrzahl von Befestigungsadaptern unter Anpassen der Befestigungsadapter an wenigstens eine Abmessung der Haltekonstruktion und/oder an wenigstens einen Neigungswinkel der Haltekonstruktion.

Das Verfahren kann sämtliche Merkmale, Varianten und Ausführungsformen umfassen, die hier im Kontext der Anordnung offenbart sind. Insbesondere kann das Verfahren sämtliche Maßnahmen oder Schritte umfassen, um sämtliche hier offenbarten Betriebszustände der Anordnung bereitzustellen. Dies umfasst auch sämtliche Maßnahmen zum Anpassen und/oder Einstellen der Befestigungsadapter.

Das vorstehende Anpassen der Befestigungsadapter kann beispielsweise das Auswählen und/oder aneinander Befestigen von hier offenbarten Komponenten des Befestigungsadapters umfassen. Zusätzlich oder alternativ kann dies das Herstellen von Relativanordnungen der Komponenten zueinander und/oder des Befestigungsadapters zu wenigstens einem von Haltekonstruktion und Trägersystem gemäß jeglicher hierin offenbarten Variante umfassen.

Die Erfindung wird im Folgenden anhand der beigefügten schematischen Figuren erläutert. Figurenübergreifend können gleiche oder gleichwirkende Merkmale mit denselben Bezugszeichen versehen sein. Die Figuren zeigen jeweils Ausschnitte einer größeren Anordnung, wobei abgeschnittene Bereiche oder, mit anderen Worten, Schnittkanten gestrichelt markiert sind.
- Figur 1: zeigt ein erfindungsgemäßes System mit einer erfindungsgemä-ßen Anordnung gemäß eines ersten Ausführungsbeispiels;
- Figur 2: ist ein Ausschnitt aus Figur 1 und zeigt eine Detailansicht eines Befestigungsadapters gemäß dem ersten Ausführungsbeispiel;
- Figur 3: ist ein Ausschnitt der Figur 1 und zeigt eine Detailansicht eines weiteren Befestigungsadapters gemäß dem ersten Ausführungsbeispiel;
- Figur 4: zeigt eine Stützanordnung, die in dem ersten Ausführungsbeispiel optional einsetzbar ist;
- Figur 5: zeigt erfindungsgemäßes System mit einer erfindungsgemäßen Anordnung gemäß eines zweiten Ausführungsbeispiels.

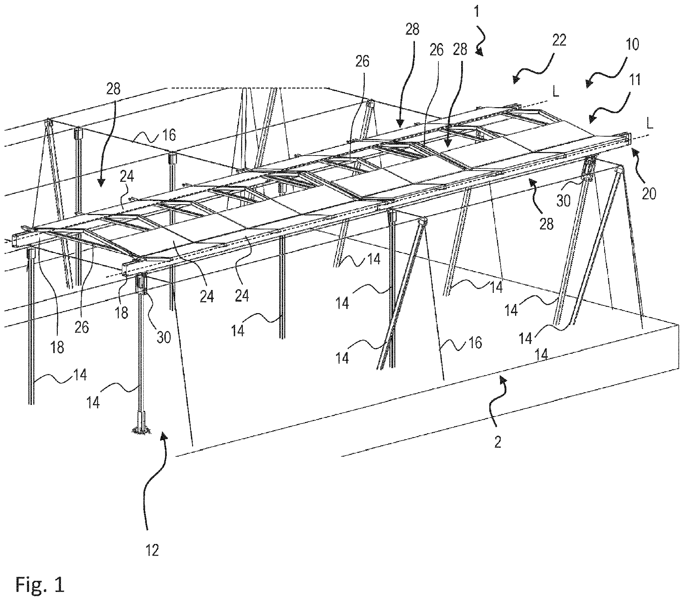

In Figur 1 ist ein Ausführungsbeispiel eines erfindungsgemäßen Systems 1 gezeigt. Das System 1 umfasst eine Haltekonstruktion 12 und eine Anordnung 10, die ebenfalls gemäß einem erfindungsgemäßen Ausführungsbeispiel ausgebildet ist. Die Haltekonstruktion 12 ist auf einer landwirtschaftlichen Fläche 2 errichtet. Eine in Figur 1 noch oben weisende Oberfläche der landwirtschaftlichen Fläche 2 entspricht einer horizontalen Raumebene.

Die Haltekonstruktion 12 ist gemäß bekannten Beispielen des Standes der Technik ausgebildet. Sie umfasst eine Mehrzahl von bodenmontierten Pfählen 14, von denen ausgewählte mit einem entsprechenden Bezugszeichen versehen sind. Beispielhaft erstrecken sich die Pfähle 14 entweder im Wesentlichen senkrecht zu der landwirtschaftlichen Fläche 2 oder schräg hierzu, beispielsweise in einem Winkel von ca. 45°.

Die Haltekonstruktion 12 dient dazu, landwirtschaftliches Zubehör in Form eines Seilsystems 16 oberhalb der landwirtschaftlichen Fläche 2 aufzuspannen. An diesem Seilsystem 16 und können in bekannter Weise Pflanzenschutznetzen oder -folien befestigt werden. Die nicht dargestellten Pflanzen befinden sich auf der landwirtschaftlichen Fläche innerhalb eines von dem Seilsystem 16 überspannten Bereichs.

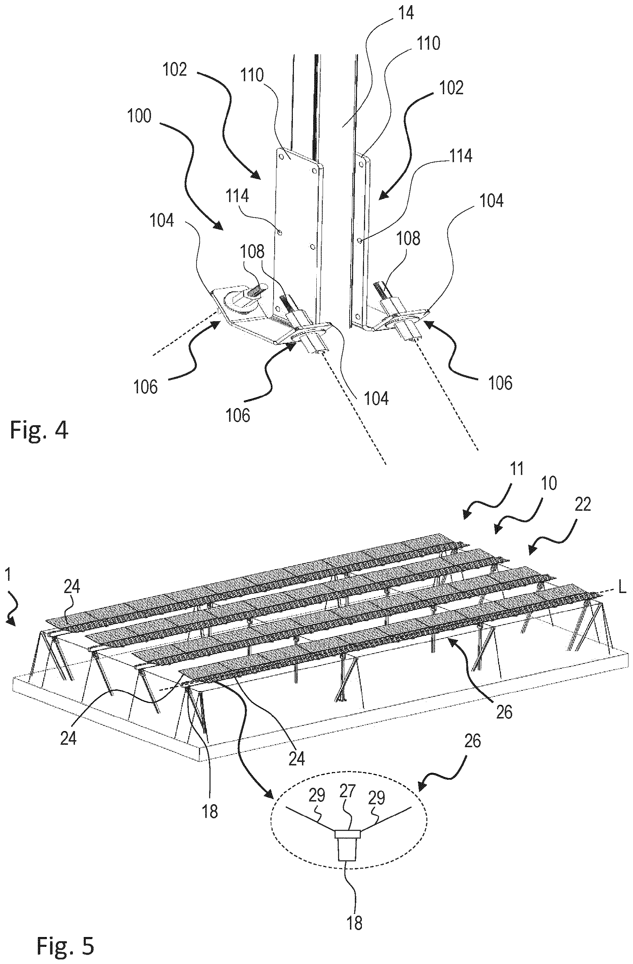

Die Pfähle 14 sind jeweils langgestreckt ausgebildet. Mit einem ersten vertikal unteren Ende sind sie am Boden befestigt, optional unterstützt durch nicht dargestellte Spinnanker (sh. nachstehende Fig. 4). Folglich bilden sie bodenmontierte Elemente im Sinne dieser Offenbarung. Mit einem entgegengesetzten vertikal oberen Ende stützen die Pfähle 14 das Seilsystem 16.

Die Anordnung 10 wird ebenfalls von der Haltekonstruktion 12 und genauer gesagt von zumindest ausgewählten Pfählen 14 der Haltekonstruktion 12 gestützt. Die Anordnung 10 ist entsprechend ebenfalls oberhalb der landwirtschaftlichen Fläche 2 positioniert. Nicht dargestellte Pflanzen befinden sich demnach unterhalb der Anordnung 10.

Die Größe und Erstreckung der dargestellten Anordnung 10 ist lediglich beispielhaft. Durch Ändern der Anzahl ihrer Komponenten und insbesondere der nachstehend erläuterten Träger 18 kann die Anordnung 10 auch größere Abmessungen aufweisen und insbesondere an sämtlichen Pfählen 14 montiert sein.

Die Anordnung 10 umfasst eine Trägersystem 11 mit beispielhaft zwei Trägern 18, die parallel zueinander verlaufen. Diese sind als entlang einer Längsachse L verlaufende langgestreckte Bauteile ausgebildet. In dem gezeigten Beispiel sind sie langgestreckte Profile, zum Beispiel aus Metall oder Kunststoff.

Die Träger 18 weisen jeweils ein nach oben offenes rechteckiges Querschnittsprofil auf. Über diese offene Oberseite kann Wasser in die Träger 18 gelangen. Das Wasser wird anschließend auf einer geschlossenen unteren Seite dieses Querschnittprofils entlang der Längsachse L geleitet. Dabei sind die Träger 18 und insbesondere deren entsprechende untere Seite für sich genommen jeweils gefällefrei, zum Beispiel vor einer Montage innerhalb der Anordnung 10. Die Träger 18 werden allerdings mit einem Gefälle innerhalb der Anordnung 10 montiert, um ein Wasserleiten zu ermöglichen.

Die Träger 10 weisen jeweils einen Ableitbereich 20 auf, aus dem in dem Träger 18 geleitetes Wasser abgeleitet werden kann. Eine beispielhafte Position eines solchen Ableitbereichs 20 ist in Figur 1 für einen der Träger 18 dargestellt. Dieser Ableitbereich 20 umfasst eine Öffnung, an der zum Beispiel ein Fallrohr anschließbar ist, um das Wasser in ein nicht dargestelltes Sammelreservoir abzuleiten.

Optional kann der Ableitbereich 20 von einem separat handhabbaren Element oder Modul umfasst sein (nicht dargestellt). Dieses kann mit einem benachbarten Träger 18 verbunden sein und insbesondere zwischen zwei axial benachbarten Trägern 18 angeordnet sein und diese verbinden. Das Element oder Modul kann (z. B. entlang der Längsachse L betrachtet) kürzer als damit verbundene Träger 18 sein und z.B. maximal ein Viertel oder maximal ein Achtel von deren Länge aufweisen. Die Verbindung mit einem Träger kann per Form- und/oder Kraftschluss und insbesondere mittels einer Steckverbindung erzielt werden. Der Ableitbereich kann z.B. ein Fallrohr umfassen oder mit einem solchen verbindbar sein.

Das Trägersystem 11 der Anordnung 10 umfasst auch eine Trägerstruktur 22, an der eine Mehrzahl von Solarmodulen 24 angeordnet ist. Ausgewählte der Solarmodule 24 sind in Figur 1 mit einem entsprechenden Bezugszeichen versehen. Die Trägerstruktur 22 umfasst eine Mehrzahl von mehrfach gegenläufig geneigten, insbesondere zick-zack-förmigen Profilen 26, von denen wiederum ausgewählte mit einem entsprechenden Bezugszeichen versehen sind. Diese Profile 26, welche wiederum aus Metall oder Kunststoff hergestellt sein können, sind entlang der Längsachse L der Träger 18 aneinandergereiht. Dabei sind sie axial beanstandet. Ferner erstrecken sich die Profile 26 jeweils quer zu der Längsachse L. Die Profile 26 stützen sich jeweils an beiden der Träger 18 ab. Im gezeigten Beispiel sind sie jeweils an beiden der Träger 18 mechanisch befestigt.

Die Profile 26 definieren gemeinsam geneigte Bereiche 28 der Trägerstruktur 22, an denen Solarmodule 24 mit einer von den Profilen vorgegebenen Neigung anordenbar sind. In dem gezeigten Beispiel umfasst jedes Profil 26 drei solcher Bereiche 28, wobei unmittelbar benachbarte Bereiche 28 jeweils relativ zueinander sowie zu der landwirtschaftlichen Fläche 2 geneigt sind.
Die Bereiche 28 sind jeweils derart relativ zu einem angrenzenden Träger 18 geneigt, dass sie zu dem Träger 18 hin abfallen. Im Beispiel von Figur 1 führt dies dazu, dass an dem rechten bzw. unteren Träger 18 beidseitig entlang dessen Längsseite entsprechend abfallende Bereiche 28 angeordnet sind. Diese Bereiche 28 sind bezogen auf den Träger 18 V-förmig angeordnet.

Im Fall des linken oberen Trägers 18 in Figur 1 existiert nur ein geneigter Bereich 28, der jedoch ebenfalls hin zum Träger 18 abfällt.

Aufgrund der entsprechenden Neigung der Bereiche 28 in Richtung der Träger 18 sind auch die daran angeordneten Solarmodule 24 zu den Trägern 18 geneigt. Somit kann Regenwasser von den Oberflächen der Solarmodule 24 in Richtung der Trägers 18 und dort in die offene Oberseite von deren Querschnittprofil eingeleitet werden.

Zur Verbindung des Trägersystems 11 mit der Haltekonstruktion 12 umfasst die Anordnung 10 eine Mehrzahl von Befestigungsadaptern 30. Zwei der Befestigungsadapter 30 sind in Figur 1 mit einem entsprechenden Bezugszeichen versehen. Es ist jedoch bevorzugt, nicht aber zwingend, dass an jedem Pfahl 14, an dem das Trägersystem 11 befestigt ist, entsprechende Befestigungsadapter 30 vorgesehen sind. Alternativ können nur an ausgewählten Pfählen 14 entsprechende Befestigungsadapter 30 vorgesehen sein und können an anderen Pfählen 14 zum Beispiel nicht verstellbare Befestigungen ohne einstellbare Adapter erfolgen.

Es ist dargestellt, dass die Befestigungsadapter 30 jeweils an den Trägern 18 per Klemmverbindung befestigt sind sowie an den oberen Enden eines Pfahls 14 (ebenfalls per Klemmverbindung). Sie erstrecken sich zwischen diesen Elementen 14, 18 und befestigen sie aneinander, sodass die Pfähle 14 und somit die Haltekonstruktion 12 die Anordnung 10 trägt. Das Seilsystem 16 ist hiervon jedoch nicht beeinflusst. Insbesondere kann das Seilsystem 16 bereits zuvor errichtet worden und in Gebrauch gewesen sein und kann die Anordnung 10 erst zu einem späteren Zeitpunkt (zum Beispiel in einem Abstand von mehreren Jahren) nachgerüstet werden. Das Seilsystem 16 kann dann jedoch in selber Weise weiterverwendet werden und muss zum Nachrüsten der Anordnung 10 auch nicht demontiert werden.

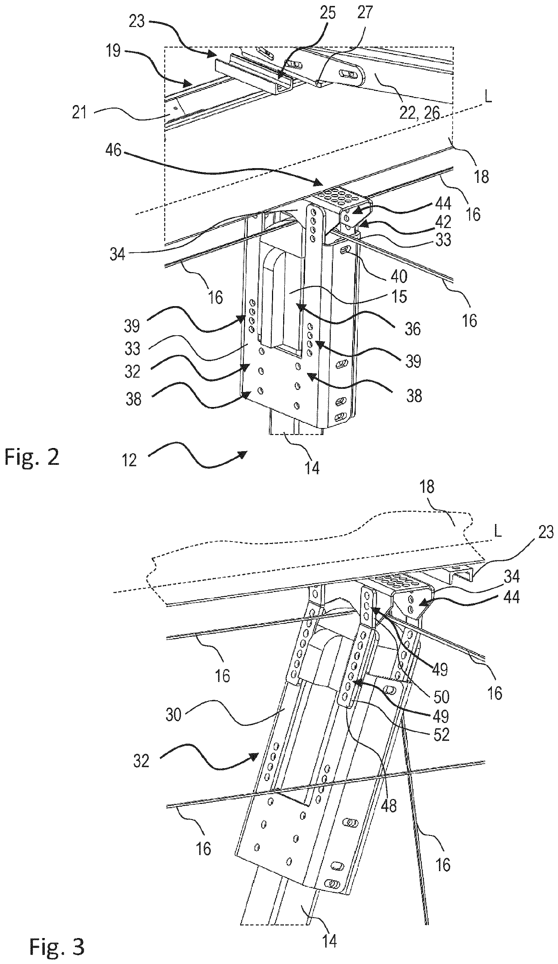

In den Figuren 2 und 3 sind Einzelheiten der Befestigungsadapter 30 dargestellt. Figur 2 zeigt einen Befestigungsadapter, der an einem aufrechten Pfahl 14 montiert ist (siehe linker unterer Befestigungsadapter 30 in Figur 1). Figur 3 zeigt einen Befestigungsadapter, der an einem schrägen Pfahl 14 montiert ist (siehe rechter unterer Befestigungsadapter 30 in Figur 1). Prinzipiell können diese Befestigungsadapter 30 gleichartig ausgebildet sein. Wie nachstehend noch erläutert, ist in dem gezeigten Beispiel jedoch insbesondere der Befestigungsadapter für den schrägen Pfahl 14 an dessen Neigung anpassbar.

In Figur 2 ist ein Ausschnitt aus Figur 1 gezeigt, wobei dieser Ausschnitt einen Abschnitt des Trägers 18 sowie von einem der Profile 26 der Trägerstruktur 22 zeigt. Man erkennt wiederum die offene Oberseite 19 des Trägers 18, in die Wasser einleitbar ist. Als ein optionales Merkmal ist ein Teil eines Versteifungsbleches 21 gezeigt, dass die beiden aufrechten Seitenwände des Trägers 18 gegeneinander versteift. Das Versteifungsblech 21, das beispielhaft eine geknickte oder auch eine ebene Form haben kann, kann optional mittels Blechschrauben mit dem Träger 18 verbunden sein.

Der Befestigungsadapter 30 ist eine mehrteilige Bauteilanordnung, die im gezeigten Fall drei Komponenten 32, 33, 34 umfasst. Diese Komponenten 32, 33, 34 nehmen einen obersten Endabschnitt 15 eines zugeordneten Pfahls 14 zwischen sich auf. Hierfür begrenzen die Komponenten 32, 33, 34 einen zumindest teilweise geöffneten Aufnahmeraum 36. In diesem Aufnahmeraum 36 und insbesondere durch diesen hindurch verlaufen auch Abschnitte des Seilsystems 16, die an dem oberen Endabschnitt 15 des Pfahls 14 befestigt sind. Details dieser Befestigung sind nicht dargestellt und können gängigen Beispielen des Standes der Technik entsprechen. Diese Befestigung wird durch den Befestigungsadapter 30 nicht behindert. Sie muss auch nicht gelöst werden, um die Komponenten 32, 33, 34 miteinander zu verbinden, was eine aufwandsarme Nachrüstbarkeit der Anordnung 10 ermöglicht.

Zwei der Komponenten 32, 33, 34 sind Unterkomponenten 33 einer übergeordneten ersten Komponente 32. Diese Unterkomponenten 33 liegen jeweils aneinander sowie an einer Außenseite des aufgenommenen Endabschnitts 15 des Pfahls 14 an. Dieser Endabschnitt 15 ist somit zumindest teilweise zwischen den Unterkomponenten 33 angeordnet oder, mit anderen Worten, wird von diesen zumindest teilweise umgeben, umschlossen oder eingehüllt. Dabei sind die Unterkomponenten 33 ferner aneinander befestigt und insbesondere mittels nicht dargestellter Befestigungselemente aneinandergeschraubt. Folglich üben sie eine Druckkraft auf den Endabschnitt 15 aus und klemmen diesen zwischen sich ein.

In Figur 2 sind untere Lochmuster 38 (oder auch: Bohrungsmuster) und auch obere Lochmuster 39 für eine der Unterkomponenten 33 gezeigt, wobei die andere Unterkomponente 33 an ihrer vom Betrachter abgewandten Seite gleichartige Lochmuster 38, 39 aufweist. Die Anzahl der Bohrungen und deren Positionen ist für jedes der Lochmuster 38, 39 beispielhaft und es könnte auch lediglich eine Bohrung je Lochmuster 38, 39 vorgesehen sein. Die oberen Lochmuster 39 der Unterkomponenten 33 fluchten miteinander, sodass nicht dargestellte Schraubbolzen hindurchführbar sind, um die Unterkomponenten 33 aneinander zu befestigen und zusammenzuziehen. Die oberen Lochmuster 39 sind entsprechend weit außen positioniert, um nicht mit dem Pfahl 14 zu überlappen und durch diesen blockiert zu werden.

Die unteren Lochmuster 38 sind hingegen näher zur Mitte der Unterkomponenten 33 positioniert. Sie liegen folglich weiter innen als die oberen Lochmuster 39 und überlappen mit dem Pfahl 14. Die Bohrungen der unteren Lochmuster 38 sind Gewindebohrungen, sodass nicht dargestellte Stellschrauben darin aufnehmbar sind. Die Stellschrauben können sich an dem Pfahl 14 abstützen. Je nach Einschraubtiefe der Stellschrauben kann somit die Relativausrichtung und/oder der Abstand der Unterkomponenten 33 zu dem Pfahl 14 variiert werden.

Als ein optionales weiteres Merkmal sind seitliche Durchbrechungen 40 gezeigt, welche beide Unterkomponenten 33 an miteinander fluchtenden Positionen umfassen. Auch hierdurch können die Unterkomponenten 33 aneinander befestigt werden und/oder können Stellschrauben für ein Einstellen des Abstandes und/oder der Ausrichtung der Unterkomponenten 33 quer zum Pfahl 14 aufgenommen werden. An einer vom Betrachter abgewandten gegenüberliegenden Seite der Unterkomponenten 33 können gleichartige Durchbrechungen 40 positioniert sein. Sofern Durchbrechungen 40 an den gegenüberliegenden Seite der Unterkomponenten 33 miteinander fluchten und nicht vom Pfahl 14 verdeckt sind, können durch sie hindurch Befestigungselemente (z.B. Schraubbolzen) geführt werden. Die gezeigte Anzahl und Position der Durchbrechungen 40 ist nicht einschränkend, sondern variierbar.

Bei der gezeigten Variante ist es von Vorteil, dass der Befestigungsadapter 30 ohne Bearbeitung oder Anpassung des Endabschnitts 15 an diesem befestigt werden kann. Stattdessen kann der Endabschnitt 15 durch Zusammenziehen der Unterkomponenten 33 zuverlässig innerhalb des Befestigungsadapters 30 festgeklemmt werden. Hierbei ist es außerdem von Vorteil, dass ein Abstand der Unterkomponenten 33 nicht fest vorgegeben ist, sondern je nach Abmessungen des Endabschnitts 15 variieren kann. Dies erweitert die Kompatibilität der Anordnung 10 mit unterschiedlichen Haltekonstruktionen 12 und somit deren Anwendungsspektrum.

Die weitere Komponente 34 des Befestigungsadapters 30 ist mit beiden der Unterkomponenten 33 verbunden. Hierfür weisen die Unterkomponenten 33 jeweils obere Lochmuster 42 auf und weist auch die Komponente 34 ein damit fluchtend anordenbares Lochmuster 44 auf. Ausgewählte Löcher der Lochmuster 42, 44 können derart fluchtenden zueinander angeordnet werden, dass die Komponente 34 mit beiden Unterkomponenten 33 verbindbar ist, beispielsweise durch Hindurchführen eines Schraubbolzens.

Durch Ändern der Auswahl der fluchtenden Löcher der Lochmuster 42, 44 können verschiedene Relativanordnungen zwischen der Komponente 34 und der Unterkomponenten 33 eingestellt werden. Da die Löcher der Lochmuster 42, 44 entlang einer vertikalen Raumachse verteilt sind, kann durch Auswahl der Relativanordnung auch die Höhe des Befestigungsadapters 30 und/oder der vertikale Abstand zwischen der Komponente 34 und den Unterkomponenten 33 variiert werden.

Hierdurch kann ein vertikaler Versatz zu dem Träger 18 ausgeglichen werden, insbesondere wenn dessen Höhe bereits durch Befestigen an einem anderen Pfahl 14 vorgegeben ist. Dies mindert entsprechend die Anforderungen an eine Positionsgenauigkeit der Haltekonstruktion 12.

Es ist darauf hinzuweisen, dass ein solcher Freiheitsgrad innerhalb des Befestigungsadapters 30 auch dann bereitstellbar ist, wenn nur einer von Komponente 34 und Unterkomponenten 33 ein Lochmuster 42, 44 mit mehreren Löchern aufweist und der jeweils andere nur ein einzelnes Loch.

Die weitere Komponente 34 umfasst an ihrer dem Träger 18 zugewandten Oberseite noch ein weiteres Lochmuster 46. Bei diesem Lochmuster 46 sind die Löcher sowohl entlang der Längsachse L des Trägers 18 als auch quer hierzu verteilt. Prinzipiell möglich ist, dass der Träger 18 an seiner gegenüberliegenden Unterseite ebenfalls wenigstens ein Loch oder auch ein Lochmuster aufweist, dass fluchtend mit zumindest ausgewählten Löchern dieses Lochmuster 46 ausgerichtet werden kann. Bevorzugt (insbesondere zum Vermeiden von Dichtigkeitsproblemen) wird aber ein Verwenden des Lochmusters 46 der weiteren Komponente 34 zur Verbindung mit einem Gegenstück 23. Dieses Gegenstück 23 ist an eine Oberseite des Trägers 18 positioniert und weist wenigstens ein teilweise erkennbares Loch und bevorzugt ein Lochmuster 25 (insbesondere eine Lochreihe) auf, bei dem eine Mehrzahl von Löchern quer zur Längsachse L des Trägers 19 verteilt ist.

Das Gegenstück 23 wird auf die Oberseite des Trägers 18 zunächst unbefestigt aufgelegt und so ausgerichtet, dass ein Befestigungselement (z.B. ein Schraubbolzen) durch das wenigstens eine Loch in ein Loch des Lochmusters 46 der weiteren Komponente 34 einführbar ist. Durch Festziehen dieses Befestigungselements kann der Träger 18 zwischen Gegenstück 23 und weiterer Komponente 34 festgeklemmt werden. Bevorzugt werden an beiden Enden des Gegenstücks 23 entsprechende Befestigungselemente aufgenommen und Klemmverbindungen hergestellt, wobei die Enden benachbart zu unterschiedlichen Seitenwänden des Trägers 18 positioniert sind (in Fig. 4 zu einer vorderen und hinteren Seitenwand).

Alternativ zu einem Gegenstück 23 kann ein Lochmuster (nicht einsehbar) zur Verbindung mit der weiteren Komponente 34 in einem Profil 26 der Trägerstruktur und genauer in einem Basisabschnitt 27 hiervon vorgesehen sein. Das Profil 26, das allgemein mehrteilig sein kann, ist analog zum Gegenstück 23 auf einer Trägeroberseite positioniert und kann durch Aufnehmen eines Befestigungselements eine analoge Klemmverbindung mit der weiteren Komponente 34 herstellen.

Es ist darauf hinzuweisen, dass das Profil 26 und insbesondere dessen Basisabschnitt 27 vorzugsweise per Klemmverbindung an dem Träger 18 gehalten werden, auch wenn keine Verbindung mit einer gegenüberliegenden Komponente 34 eines Befestigungsadapters möglich ist. Wie in Fig. 3 gezeigt, kann in diesem Fall ein Gegenstück 23 an einer Unterseite des Trägers 18 angeordnet werden, wobei dieses Gegenstück 23 analog zu demjenigen aus Fig. 2 ausgebildet ist. Dieses Gegenstück 23 kann mit dem Profil 26 per Befestigungselement unter Einklemmen des Trägers 18 verbunden werden.

Allgemein vereinfacht das Herstellen von Klemmverbindungen die Installation, z. B. da die Gegenstücke 23 frei entlang der Träger 18 positionierbar sein können, je nach Position eines hiermit zu verbindenden Befestigungsadapters 30 oder Profils 26. Auch müssen keine Bohrungen im Träger 18 hergestellt werden, insbesondere nicht während der Installation und/oder nicht individuell angepasst an Positionen oder Ausrichtungen der Befestigungsadapter 30, Profile 26 oder der Haltekonstruktion 12.

Somit sind prinzipiell erneut mehrere Relativanordnungen möglich, in denen das Lochmuster 46 und somit die weitere Komponente 34 relativ zu dem Träger 18 angeordnet und an diesem befestigt werden kann.

Dadurch ergeben sich Freiheitsgrade entlang der Längsachse L des Trägers 18 sowie quer hierzu. Dies bedeutet zum Beispiel, dass der Träger 18 auch quer zu einer Mitte des Endabschnitts 15 versetzt sein kann.

Der Befestigungsadapter 30 in Fig. 3 umfasst zur Variante der Figur 2 gleichartige und gleichwirkende Komponenten 32 (bzw. Unterkomponenten 33) und 34, was in vorteilhafter Weise die Anzahl an Gleichteilen erhöht. Zwecks Neigungsanpassung sind diese jedoch mit wenigstens einer weiteren (dritten) Komponenten 48 verbunden. Im gezeigten Beispiel sind vier Komponenten 48 vorgesehen. Die Komponenten 48 sind jeweils starre einstückige Bauteile, insbesondere Blechbauteile. Sie weisen eine gewinkelte nicht-ebene Form auf. Folglich umfassen sie wenigstens einen ersten (zum Beispiel) ebenen Bereich 50 und wenigstens einen zweiten (zum Beispiel) ebenen Bereich 52 auf. Jeder der Bereiche 50, 52 weist wiederum ein Lochmuster 49 auf. Diese fluchten mit jeweils einem der Lochmuster 44, 42 in den Komponenten 32, 33, 34, sodass die dritte Komponente 48 an beiden benachbarten Komponenten 32, 33, 34 befestigbar ist und diese miteinander verbindet.

Je nach dem Winkel der ausgewählten dritten Komponenten 48 kann der Befestigungsadapter 30 an eine Neigung des Pfahls 14 angepasst werden. Diese Anpassung kann derart erfolgen, dass der Befestigungsadapter 30 trotz Neigung des Pfahls 14 an dem typischerweise weniger stark relativ zu der landwirtschaftlichen Fläche 2 geneigten Träger 18 befestigt werden kann.

Das Vorsehen der Lochmuster 42, 44, 49 ermöglicht zudem wiederum eine Höhenanpassung des Befestigungsadapters 30, auch bei Verwendung der gewinkelten Komponente 48 (sh. vorstehend zu Figur 2 erläutertes Zusammenwirken der Lochmuster 42, 44 zwecks Höhenanpassung).

Figur 4 zeigt eine Stützanordnung 100, die in dem System 1 des ersten Ausführungsbeispiels eigesetzt werden kann, ohne auf das erste Ausführungsbeispiel beschränkt zu sein. Die Stützanordnung 100 umfasst zwei Stützelemente 102. Diese sind an gegenüberliegenden Seite eines Pfahls 14 angeordnet und liegen bevorzugt an diesen Seiten an. Die Stützelemente 102 liegen mit Ihrer in Fig. 4 nach unten weisenden Seite bevorzugt auf einem Untergrund (also dem Boden der landwirtschaftlichen Fläche 2) auf.

Die Stützelemente 102 weisen einen plattenförmigen Abschnitt 110. Sie sind an ihren jeweiligen Seiten, die dem Pfahl 14 zugewandt sind, eben. Am unteren bodennahe Ende des plattenförmigen Abschnitts 110 weisen die Stützelemente 102 einen vom plattenförmigen Abschnitt 110 vorstehenden Abschnitt 112 auf. Dieser erstreckt sich im Wesentlichen orthogonal zu dem plattenförmigen Abschnitt und zu einer (nicht dargestellten) Längsachse des Pfahls 14.

An jedem vorstehenden Abschnitt 112 sind zwei angewinkelte Abschnitte 104 angeordnet (teils verdeckt für das in Fig. 4 rechte Stützelemente 102). Diese erstrecken sich in einem Winkel zu dem vorstehenden Abschnitt 112 (und insbesondere auch zu dem Untergrund). Dieser Winkel kann z. B. zwischen 20° und 65°, zwischen 20° und 50° oder zwischen 40° und 50° betragen, zum Beispiel 45°. Jeder vorstehende Abschnitt 104 weist eine Öffnung 106 auf. In jeder Öffnung 106 ist ein Gewindestab 108 aufgenommen (beispielhaft gesichert über abgebildete Muttern und Unterlegscheiben). Die Gewindestäbe 108 reichen ins Erdreich und weisen eine Länge von mehr als einem Meter auf. Ihre Erstreckung ist in Fig. 4 strichliert angedeutet.

Um die Stützelemente 102 aneinander und an dem Pfahl 14 zu sichern, weisen sie jeweils eine Mehrzahl von Bohrungen 114 (nur einzelne mit eigenem Bezugszeichen versehen). Diese Bohrungen werden fluchtend zueinander ausgerichtet, sodass nicht dargestellte Verbindungselemente, z. B. Schraubbolzen, darin einsetzbar sein, um die Stützelemente 102 aneinander zu befestigen. Hierüber werden die Stützelemente 102 zueinander gezogen, sodass sie den Pfahl 14 zwischen sich einklemmen. Über diese Klemmverbindung sind sie relativ zum Pfahl 14 festgelegt.

An dem Pfahl 14 selbst sind keine Modifikationen nötig, um die Stützanordnung 100 anzubringen. Dies verbessert eine Nachrüstbarkeit der Stützanordnung 100. Die Stützanordnung 100 kann die bestehende Haltekonstruktion 12 zusätzlich stabilisieren, um die Last der ergänzten Anordnung 10 abzufangen.

Figur 5 zeigt ein System 1 und eine Anordnung 10 gemäß einer weiteren Ausführungsform. Gleichartige oder gleichwirkende Komponenten können mit den gleichen Bezugszeichen wie bei den vorangehenden Figuren versehen sein. Diese Ausführungsform unterscheidet sich von dem vorangehenden Beispiel hinsichtlich der Trägerstruktur 22. Diese umfasst je Träger 18 eine Mehrzahl von Profilen 26, die nur an diesem einzelnen Träger 18 befestigt sind, bevorzugt mittels einer Klemmverbindung wie anhand der Figuren 2 und 3 erläutert. Eine Mehrzahl entsprechender Profile 26 ist entlang der Längsachse L eines jeden Trägers 18 aneinandergereiht, bevorzugt in gleichmäßigen axialen Abständen.

In Fig. 5 ist eines der Profile 26 schematisch stark vereinfacht in einer vergrößerten Frontansicht gezeigt. Die in dieser vergrößerten Ansicht nicht gezeigten Trägerlängsachse L steht senkrecht auf der Blattebene.

Das Profil 26 ist mehrteilig ausgebildet, kann aber auch ein integrales Bauteil sein. Es umfasst einen Basisabschnitt 27, der auf einer Oberseite eines Trägers 18 aufliegt. Dieser Basisabschnitt 27 kann analog zu Fig. 2 ausgebildet sein und/oder zum Herstellen einer Klemmverbindung mit einem nicht dargestellten Befestigungsadapter 30 eingerichtet sein.

An dem Basisabschnitt 27 sind beidseitig Profilarme 29 angeordnet, deren einander zugewandte Innenseiten einen Winkel zwischen 100° und 170° einschließen, zum Beispiel einen Winkel zwischen 120° und 150°. An diesen Innenseiten, welche Oberseite in Bezug auf die landwirtschaftliche Fläche 2 bilden, sind Solarmodule 24 in V-förmiger Ausrichtung angeordnet (nicht dargestellt in der vergrößerten Teilanschnitt von Fig. 5).

Ein Vorteil dieser Ausführungsform sind die kompakten und dadurch leichten Profile 26.

### Bezugszeichenliste

- 1: System
- 2: landwirtschaftliche Fläche
- 10: Anordnung
- 11: Trägersystem
- 12: Haltekonstruktion
- 14: Pfahl
- 15: Endabschnitt
- 16: Seilsystem
- 18: Träger
- 19: Oberseite des Trägers
- 20: Ableitbereich
- 21: Versteifungsblech
- 22: Trägerstruktur
- 23: Gegenstück
- 24: Solarmodul
- 25: Lochmuster
- 26: Profil
- 27: Basisabschnitt
- 28: geneigter Bereich
- 29: Profilarm
- 30: Befestigungsadapter
- 32: erste Komponente
- 33: Unterkomponente
- 34: zweite Komponente
- 36: Aufnahmeraum
- 38: unteres Lochmuster
- 39: oberes Lochmuster
- 40: Durchbrechung
- 42: oberes Lochmuster
- 44: Lochmuster (in zweiter Komponente)
- 46: Lochmuster (an Oberseite)
- 48: dritte Komponente
- 49: Lochmuster (der dritten Komponente)
- 50: ebener Bereich (der dritten Komponente)
- 52: ebener Bereich (der dritten Komponente)
- 100: Stützanordnung
- 102: Stützelement
- 104: angewinkelter Abschnitt
- 106: Öffnung
- 108: Gewindestabs
- 110: plattenförmiger Abschnitt
- 112: vorstehenden Abschnitt
- 114: Bohrung
- L: Längsachse

Die Erfindung betrifft insbesondere die folgenden Aspekte:
1. Anordnung (10) zum Anbringen von Solarmodulen (24) an einer Haltekonstruktion (12), die auf einer landwirtschaftlichen Fläche (2) errichtet ist, wobei die Haltekonstruktion (12) zum Halten von Pflanzenschutznetzen, Pflanzenschutzfolien, Rankhilfen, Seilen oder anderem landwirtschaftlichen Zubehör eingerichtet ist;
   wobei die Anordnung (10) ein Trägersystem (11) umfasst mit:
      - wenigstens einem langgestreckten Träger (18), der für ein Leiten von Wasser entlang seiner Längsachse (L) eingerichtet ist, und;
      - einer Trägerstruktur (22), die sich an dem langgestreckten Träger (18) abstützt und an der eine Mehrzahl von Solarmodulen anbringbar ist;
   und wobei die Anordnung (10) eine Mehrzahl von Befestigungsadaptern (30) umfasst, die für ein Befestigen des Trägersystems (11) an der Haltekonstruktion (12) eingerichtet sind und wobei jeder Befestigungsadapter (30) an wenigstens eine Abmessung der Haltekonstruktion (12) und/oder an einen Neigungswinkel der Haltekonstruktion (12) anpassbar ist.
2. Anordnung (10) nach Aspekt 1,
   wobei die Haltekonstruktion (12) mehrere Pfähle (14) oder andere bodenmontierte Elemente umfasst und jeder Befestigungsadapter (30) zum Befestigen des Trägersystems (11) an einem der Pfähle (14) oder einem der anderen bodenmontierten Elemente eingerichtet ist.
3. Anordnung (10) nach Aspekt 1 oder 2,
   wobei jeder Befestigungsadapter (30) zum Aufnehmen eines Abschnitts von einem der bodenmontierten Elementen und optional zum Aufnehmen eines Abschnitts des landwirtschaftlichen Zubehörs eingerichtet ist.
4. Anordnung (10) nach einem der vorangehenden Aspekte,
   wobei jeder Befestigungsadapter (30) eingerichtet ist, eine Klemmverbindung mit der Haltekonstruktion (12) und/oder dem Träger (18) herzustellen.
5. Anordnung (10) nach einem der vorangehenden Aspekte,
   wobei eine Mehrzahl von Relativanordnungen von zumindest einem Bereich eines jeden Befestigungsadapters (30) und wenigstens einer Komponente des Trägersystems (11) existiert, in denen der Befestigungsadapter (30) an dem Trägersystem (11) befestigbar ist.
6. Anordnung (10) nach Aspekt 5,
   wobei die Relativanordnungen umfassen, dass der zumindest eine Bereich des Befestigungsadapters (30) in wenigstens zwei Positionen relativ zu der Komponente des Trägersystems (11) anordenbar und an dieser befestigbar ist, wobei diese Positionen entlang einer Achse verteilt sind, die in einem Winkel und insbesondere orthogonal zu der Längsachse (L) des Trägers (18) verläuft.
7. Anordnung (10) nach Aspekt 5 oder 6,
   wobei die Relativanordnungen umfassen, dass der zumindest eine Bereich des Befestigungsadapters (30) in wenigstens zwei Positionen relativ zu der Komponente des Trägersystems (11) anordenbar und an dieser befestigbar ist, wobei diese Positionen entlang einer Achse verteilt sind, die parallel zu oder entlang der Längsachse (L) des Trägers (18) verläuft.
8. Anordnung (10) nach einem der vorangehenden Aspekt,
   wobei jeder Befestigungsadapter (30) einen Aufnahmeraum (36) zur Aufnahme eines Abschnitts der Haltekonstruktion (12) aufweist, wobei wenigstens eine Abmessung des Aufnahmeraums (36) variierbar ist.
9. Anordnung (10) nach einem der vorangehenden Aspekt,
   wobei jeder Befestigungsadapter (30) eine erste Komponente (32) zum Befestigen an der Haltekonstruktion (12) und wenigstens eine zweite Komponente (34) zum Befestigen an dem Trägersystem (11) umfasst, wobei die erste und die zweite Komponente (32, 34) verschieden relativ zueinander anordenbar sind.
10. Anordnung (10) nach Aspekt 9,
   wobei die erste und die zweite Komponente (32, 34) entlang einer vertikalen Raumachse verschieden relativ zueinander anordenbar sind.
11. Anordnung (10) nach einem der Aspekte 9 bis 10,
   wobei die erste Komponente (32) wenigstens zwei Unterkomponenten (33) umfasst, deren Relativanordnung zueinander variierbar ist.
12. Anordnung (10) nach Aspekt 8 und 11,
   wobei durch Ändern der Relativanordnung der Unterkomponenten (33) die wenigstens eine Abmessung des Aufnahmeraums (36) variierbar ist.
13. Anordnung (10) nach einem der Aspekte 9 bis 12 und Aspekt 5, wobei die zweite Komponente (34) ein Lochmuster (46) aufweist, das ein Herstellen der verschiedenen Relativanordnungen ermöglicht.
14. Anordnung (10) nach einem der Aspekte 9 bis 13,
   wobei jeder Befestigungsadapter (30) wenigstens eine dritte Komponente (48) aufweist, die dazu eingerichtet ist, die erste Komponente (32) und die zweite Komponente (34) zumindest mittelbar miteinander zu koppeln.
15. Anordnung (10) nach Aspekt 14,
   wobei die dritte Komponente (48) eine gewinkelte Form aufweist.
16. Anordnung (10) nach Aspekt 14 oder 15,
   wobei eine Anordnung von der dritten Komponente (48) an wenigstens einer von erster und zweiter Komponente (32, 34) entlang einer vertikalen Raumachse variierbar ist.
17. Anordnung (10) nach einem der vorangehenden Aspekte,
   wobei der Träger (18) an einer von der landwirtschaftlichen Fläche (2) wegweisenden Oberseite (19) zumindest abschnittsweise geöffnet ist.
18. Anordnung (10) nach einem der vorangehenden Aspekte,
   wobei der Träger (18) zwecks Wasserleiten einen U-förmigen Querschnitt, einen rechteckförmigen Querschnitt oder einen anderen zumindest teilweise geschlossenen Querschnitt aufweist.
19. Anordnung (10) nach einem der vorangehenden Aspekte,
   wobei der Träger (18) und insbesondere eine das Wasser führende Fläche hiervon zumindest in einem nicht in der Anordnung (10) verbauten Zustand gefällefrei ist.
20. Anordnung (10) nach einem der vorangehenden Aspekte,
   wobei die Befestigungsadapter (30) dazu eingerichtet sind, das Trägersystem (11) an der Haltekonstruktion (12) unter Einstellen einer Neigung des Trägers (18) zu der landwirtschaftlichen Fläche (2) zu befestigen.
21. Anordnung (10) nach einem der vorangehenden Aspekte, wobei die Trägerstruktur (22) wenigstens einen Bereich (28) aufweist, an dem wenigstens ein Solarmodul (24) anordenbar ist, wobei dieser Bereich (28) zum Träger (18) abfallend geneigt ist.
22. Anordnung (10) nach Aspekt 21,
   wobei Regenwasser von einem an dem geneigten Bereich (28) angeordneten Solarmodul (24) in den Träger (18) leitbar ist.
23. Anordnung (10) nach einem der Aspekte 21 bis 22,
   wobei die Trägerstruktur (22) wenigstens zwei geneigte Bereiche (28) aufweist, die an gegenüberliegenden Seiten des Trägers (18) angeordnet sind, und die jeweils zum Träger (18) abfallend geneigt sind.
24. Anordnung (10) nach einem der Aspekte 20 bis 22,
   mit einer Mehrzahl von Trägern (18), die jeweils mit der Trägerstruktur (22) verbunden sind, wobei die Trägerstruktur (22) in einem Bereich zwischen den Trägern (18) zwei entgegengesetzt geneigte Bereiche (28) aufweist, die zu einem jeweils benachbarten Träger (18) hin abfallend geneigt sind.
25. Anordnung nach einem der vorangehenden Aspekte,
   wobei der Träger (18), um Wasser aus dem Träger (18) abzuleiten, wenigstens einen Ableitbereich (20) umfasst und/oder mit einem Modul verbunden oder verbindbar ist, das einen Ableitbereich (20) aufweist.
26. Anordnung (10) nach einem der vorangehenden Aspekte,
   wobei jeder Befestigungsadapter (30) um einen Abschnitt der Haltekonstruktion (12) zusammensetzbar (12) ist, insbesondere ohne dass das landwirtschaftliche Zubehör von der Haltekonstruktion (12) gelöst werden muss.
27. Anordnung (10) nach einem der vorangehenden Aspekte,
   wobei die Haltekonstruktion (12) mehrere Pfähle (14) oder andere bodenmontierte Elemente umfasst und die Anordnung (10) wenigstens eine bodenmontierte Stützanordnung (100) umfasst, die dazu eingerichtet ist, wenigstens einen der Pfähle (14) oder eines der anderen bodenmontierte Elemente gegenüber der landwirtschaftlichen Fläche (2) abzustützen.
28. Anordnung (10) nach Aspekt 27,
   wobei die Stützanordnung (100) wenigstens zwei Stützelemente (102) umfasst, zwischen denen ein Teil des wenigstens einen Pfahls (14) oder anderen bodenmontierten Elements aufnehmbar ist, insbesondere wobei der aufgenommene Teil zwischen den Stützelementen (102) einklemmbar ist.
29. Anordnung (10) nach Aspekt 28,
   wobei wenigstens eines der Stützelemente (102) einen gegenüber der landwirtschaftlichen Fläche angewinkelten Abschnitt (104) umfasst, wobei in dem angewinkelte Abschnitt eine Öffnung (106) zur Aufnahme eines Gewindestabs (108) oder eines anderen bodenmontierten Verbindungselements ausgebildet ist.
30. Anordnung (10) nach einem der vorangehenden Aspekte,
   wobei der Befestigungsadapter (30) wenigstens eine Gewindebohrung umfasst, in die eine Stellschraube eingesetzt oder einsetzbar ist, wobei die Gewindebohrung mit einem Bereich der Haltekonstruktion (12) überlappt, sodass sich die Stellschraube an der Haltekonstruktion (12) abstützen kann.
31. Anordnung (10) nach einem der vorangehenden Aspekte,
   wobei der Befestigungsadapter (30) mit einem Gegenstück (23) oder mit dem Trägersystem (22) verbunden ist, wobei wenigstens ein Abschnitt des Trägers (18) zwischen dem Befestigungsadapter (30) und dem Gegenstück (23) oder dem Trägersystem (22) angeordnet ist.
32. Befestigungsadapter (30) zum Befestigen eines Trägersystems (11) für Solarmodule (24) an einer Haltekonstruktion (12), die auf einer landwirtschaftlichen Fläche (2) errichtet ist, wobei die Haltekonstruktion (12) zum Halten von Pflanzenschutznetzen, Pflanzenschutzfolien, Rankhilfen, Seilen oder anderen landwirtschaftlichem Zubehör eingerichtet ist;
   wobei der Befestigungsadapter (30) an wenigstens eine Abmessung der Haltekonstruktion (12) und/oder an wenigstens einen Neigungswinkel der Haltekonstruktion (12) anpassbar ist.
33. System (1), mit:
   - einer Anordnung (10) nach einem der vorangehenden Aspekte; und
   - einer Haltekonstruktion (12), die auf einer landwirtschaftlichen Fläche (2) errichtet oder errichtbar ist, wobei die Haltekonstruktion (12) zum Halten von Pflanzenschutznetzen, Pflanzenschutzfolien, Rankhilfen, Seilen oder anderem landwirtschaftlichen Zubehör eingerichtet ist;
   wobei das Trägersystem (11) der Anordnung (10) mittels den Befestigungsadaptern (30) der Anordnung (10) an der Haltekonstruktion (12) befestigt ist.
34. Stützanordnung (100) zum Stabilisieren einer Haltekonstruktion (12), die auf einer landwirtschaftlichen Fläche (2) errichtet oder errichtbar ist, wobei die Haltekonstruktion (12) zum Halten von Pflanzenschutznetzen, Pflanzenschutzfolien, Rankhilfen, Seilen oder anderem landwirtschaftlichen Zubehör eingerichtet ist,
   wobei die Stützanordnung (100) wenigstens zwei Stützelemente (102) umfasst, zwischen denen ein Teil von wenigstens einem Pfahl (14) oder einem anderen bodenmontierten Element der Haltekonstruktion (12) aufnehmbar und insbesondere einklemmbar ist,
   wobei wenigstens eines der Stützelemente (102) einen gegenüber der landwirtschaftlichen Fläche angewinkelten Abschnitt (104) umfasst, wobei der angewinkelte Abschnitt (104) eine Öffnung (106) zu Aufnahme eines Gewindestabs (108) oder eines anderen bodenmontierten Verbindungselements umfasst.

## Patentansprüche

1. Anordnung (10) zum Anbringen von Solarmodulen (24) an einer Haltekonstruktion (12), die auf einer landwirtschaftlichen Fläche (2) errichtet ist, wobei die Haltekonstruktion (12) zum Halten von Pflanzenschutznetzen, Pflanzenschutzfolien, Rankhilfen, Seilen oder anderem landwirtschaftlichen Zubehör eingerichtet ist;
wobei die Anordnung (10) ein Trägersystem (11) umfasst mit:
- wenigstens einem langgestreckten Träger (18), der für ein Leiten von Wasser entlang seiner Längsachse (L) eingerichtet ist, und;
- einer Trägerstruktur (22), die sich an dem langgestreckten Träger (18) abstützt und an der eine Mehrzahl von Solarmodulen anbringbar ist;
und wobei die Anordnung (10) eine Mehrzahl von Befestigungsadaptern (30) umfasst, die für ein Befestigen des Trägersystems (11) an der Haltekonstruktion (12) eingerichtet sind und wobei jeder Befestigungsadapter (30) an wenigstens eine Abmessung der Haltekonstruktion (12) und/oder an einen Neigungswinkel der Haltekonstruktion (12) anpassbar ist.

2. Anordnung (10) nach Anspruch 1,
wobei die Haltekonstruktion (12) mehrere Pfähle (14) oder andere bodenmontierte Elemente umfasst und jeder Befestigungsadapter (30) zum Befestigen des Trägersystems (11) an einem der Pfähle (14) oder einem der anderen bodenmontierten Elemente eingerichtet ist.

3. Anordnung (10) nach Anspruch 1 oder 2,
wobei jeder Befestigungsadapter (30) zum Aufnehmen eines Abschnitts von einem der bodenmontierten Elementen und optional zum Aufnehmen eines Abschnitts des landwirtschaftlichen Zubehörs eingerichtet ist.

4. Anordnung (10) nach einem der vorangehenden Ansprüche,
wobei jeder Befestigungsadapter (30) eingerichtet ist, eine Klemmverbindung mit der Haltekonstruktion (12) und/oder dem Träger (18) herzustellen.

5. Anordnung (10) nach einem der vorangehenden Ansprüche,
wobei eine Mehrzahl von Relativanordnungen von zumindest einem Bereich eines jeden Befestigungsadapters (30) und wenigstens einer Komponente des Trägersystems (11) existiert, in denen der Befestigungsadapter (30) an dem Trägersystem (11) befestigbar ist.

6. Anordnung (10) nach einem der vorangehenden Ansprüche, wobei jeder Befestigungsadapter (30) eine erste Komponente (32) zum Befestigen an der Haltekonstruktion (12) und wenigstens eine zweite Komponente (34) zum Befestigen an dem Trägersystem (11) umfasst, wobei die erste und die zweite Komponente (32, 34) verschieden relativ zueinander anordenbar sind,
insbesondere
wobei die erste und die zweite Komponente (32, 34) entlang einer vertikalen Raumachse verschieden relativ zueinander anordenbar sind; und/oder
wobei die erste Komponente (32) wenigstens zwei Unterkomponenten (33) umfasst, deren Relativanordnung zueinander variierbar ist.

7. Anordnung (10) nach einem der vorangehenden Ansprüche, wobei der Träger (18) und insbesondere eine das Wasser führende Fläche hiervon zumindest in einem nicht in der Anordnung (10) verbauten Zustand gefällefrei ist.

8. Anordnung (10) nach einem der vorangehenden Ansprüche, wobei die Befestigungsadapter (30) dazu eingerichtet sind, das Trägersystem (11) an der Haltekonstruktion (12) unter Einstellen einer Neigung des Trägers (18) zu der landwirtschaftlichen Fläche (2) zu befestigen.

9. Anordnung (10) nach einem der vorangehenden Ansprüche, wobei die Trägerstruktur (22) wenigstens einen Bereich (28) aufweist, an dem wenigstens ein Solarmodul (24) anordenbar ist, wobei dieser Bereich (28) zum Träger (18) abfallend geneigt ist, insbesondere wobei Regenwasser von einem an dem geneigten Bereich (28) angeordneten Solarmodul (24) in den Träger (18) leitbar ist.

10. Anordnung nach einem der vorangehenden Ansprüche,
wobei der Träger (18), um Wasser aus dem Träger (18) abzuleiten, wenigstens einen Ableitbereich (20) umfasst und/oder mit einem Modul verbunden oder verbindbar ist, das einen Ableitbereich (20) aufweist.

11. Anordnung (10) nach einem der vorangehenden Ansprüche,
wobei jeder Befestigungsadapter (30) um einen Abschnitt der Haltekonstruktion (12) zusammensetzbar (12) ist, insbesondere ohne dass das landwirtschaftliche Zubehör von der Haltekonstruktion (12) gelöst werden muss.

12. Anordnung (10) nach einem der vorangehenden Ansprüche,
wobei die Haltekonstruktion (12) mehrere Pfähle (14) oder andere bodenmontierte Elemente umfasst und die Anordnung (10) wenigstens eine bodenmontierte Stützanordnung (100) umfasst, die dazu eingerichtet ist, wenigstens einen der Pfähle (14) oder eines der anderen bodenmontierte Elemente gegenüber der landwirtschaftlichen Fläche (2) abzustützen,
insbesondere wobei die Stützanordnung (100) wenigstens zwei Stützelemente (102) umfasst, zwischen denen ein Teil des wenigstens einen Pfahls (14) oder anderen bodenmontierten Elements aufnehmbar ist, insbesondere wobei der aufgenommene Teil zwischen den Stützelementen (102) einklemmbar ist.

13. Befestigungsadapter (30) zum Befestigen eines Trägersystems (11) für Solarmodule (24) an einer Haltekonstruktion (12), die auf einer landwirtschaftlichen Fläche (2) errichtet ist, wobei die Haltekonstruktion (12) zum Halten von Pflanzenschutznetzen, Pflanzenschutzfolien, Rankhilfen, Seilen oder anderen landwirtschaftlichem Zubehör eingerichtet ist;
wobei der Befestigungsadapter (30) an wenigstens eine Abmessung der Haltekonstruktion (12) und/oder an wenigstens einen Neigungswinkel der Haltekonstruktion (12) anpassbar ist.

14. System (1), mit:
- einer Anordnung (10) nach einem der Ansprüche 1 -12; und
- einer Haltekonstruktion (12), die auf einer landwirtschaftlichen Fläche (2) errichtet oder errichtbar ist, wobei die Haltekonstruktion (12) zum Halten von Pflanzenschutznetzen, Pflanzenschutzfolien, Rankhilfen, Seilen oder anderem landwirtschaftlichen Zubehör eingerichtet ist;
wobei das Trägersystem (11) der Anordnung (10) mittels den Befestigungsadaptern (30) der Anordnung (10) an der Haltekonstruktion (12) befestigt ist.

15. Stützanordnung (100) zum Stabilisieren einer Haltekonstruktion (12), die auf einer landwirtschaftlichen Fläche (2) errichtet oder errichtbar ist, wobei die Haltekonstruktion (12) zum Halten von Pflanzenschutznetzen, Pflanzenschutzfolien, Rankhilfen, Seilen oder anderem landwirtschaftlichen Zubehör eingerichtet ist,
wobei die Stützanordnung (100) wenigstens zwei Stützelemente (102) umfasst, zwischen denen ein Teil von wenigstens einem Pfahl (14) oder einem anderen bodenmontierten Element der Haltekonstruktion (12) aufnehmbar und insbesondere einklemmbar ist,
wobei wenigstens eines der Stützelemente (102) einen gegenüber der landwirtschaftlichen Fläche angewinkelten Abschnitt (104) umfasst, wobei der angewinkelte Abschnitt (104) eine Öffnung (106) zu Aufnahme eines Gewindestabs (108) oder eines anderen bodenmontierten Verbindungselements umfasst.
